(19) Europäisches Patentamt
European Patent Office
Office européen des brevets

(11) Publication number: **0 039 365**
**B1**

(12) **EUROPEAN PATENT SPECIFICATION**

(45) Date of publication of patent specification: **04.06.86**

(51) Int. Cl.[4]: **C 08 L 63/00**, C 08 L 27/16, C 08 L 27/12

(21) Application number: **80902319.5**

(22) Date of filing: **14.10.80**

(86) International application number: **PCT/US80/01373**

(87) International publication number: **WO 81/01150 30.04.81 Gazette 81/11**

# (54) EPICHLOROHYDRIN ELASTOMER COMPOSITIONS.

(30) Priority: **23.10.79 US 87501**
**23.10.79 US 87503**

(43) Date of publication of application:
**11.11.81 Bulletin 81/45**

(45) Publication of the grant of the patent:
**04.06.86 Bulletin 86/23**

(84) Designated Contracting States:
**DE FR GB SE**

(56) References cited:
**EP-A-0 004 087**
**FR-A-2 413 426**
**US-A-2 807 648**
**US-A-3 726 841**
**US-A-4 051 078**
**US-A-4 188 352**
**US-H- 915 011**

**The file contains technical information submitted after the application was filed and not included in this specification**

(73) Proprietor: **MINNESOTA MINING AND MANUFACTURING COMPANY**
**3M Center, P.O. Box 33427**
**St. Paul, Minnesota 55133-3427 (US)**

(72) Inventor: **WORM, Allan T.**
**P.O. Box 33427**
**St. Paul, MN 55133 (US)**
Inventor: **STIVERS, David A.**
**P.O. Box 33427**
**St. Paul, MN 55133 (US)**

(74) Representative: **Baillie, Iain Cameron et al**
**c/o Ladas & Parry Isartorplatz 5**
**D-8000 München 2 (DE)**

(56) References cited:

**Encyclopedia of polymer sciences and technology, vol. 6, (Interscience, N.Y.), publ. 1967, pages 198-200**
**Wiegand et al., "Triarylsulfonium halides", J. Org. Chem. 33, pages 2671-2675, publ. 1968**
**Ohkubo et al., "Ultraviolet spectroscopy study on sulfonium salts", J. Org. Chem. 36, pages 3149-55, publ. 1971**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 039 365 B1

## Description

Technical field

This invention relates to polyepichlorohydrin gum stock, curable compositions thereof, and to shaped articles of the cured elastomer products thereof. This invention also relates to gum stocks containing blends of polyepichlorohydrin gum and fluoroelastomer gum, curable compositions thereof, and to shaped articles of the cured elastomer products thereof.

Background art

Linear homopolymers of epichlorohydrin and linear copolymers of epichlorohydrin with other cyclic ethers are commonly referred to as polyepichlorohydrin gums. These linear polymers are typically thermally cured (i.e. crosslinked or vulcanized, thereby undergoing conversion from a thermoplastic substance to a thermoset substance) into useful elastomeric products using imidazolines (e.g. 2-mercaptoimidazoline), diamines (e.g. hexamethylene diamine), internal salts of diamines (e.g. hexamethylene diamine carbamate), and thioureas (e.g. trimethylthiourea) as curing agents, in conjunction with acid acceptors such as red lead ($Pb_3O_4$) and dibasic lead phosphite ($PbHPO_3$). These conventionally compounded polymers or curable gum stocks tend to undergo premature, partial cure ("scorch") during compounding, milling or storage. If significant scorch occurs, the gum stock can no longer be readily molded. In addition, conventionally cured epichlorohydrin elastomers have limited life at moderately elevated temperatures (for example, about 1 to 3 weeks at 150°C for epichlorohydrin homopolymer), losing strength and resilience. Failure of the cured elastomer may be due to excessive cross-linking (whereby the rubber part becomes rigid or brittle) or reversion (whereby the rubber part becomes soft and weak). Sometimes failure of these cured elastomers is rapid and catastrophic, resulting in machine breakdown, inconvenience, expense and lost time. Also, most conventionally cured epichlorohydrin elastomers undergo significant compression set in use, i.e., they lose their resilience after being subjected to long-term compressive stress, failing to return to their original dimensions when released. Compression set is aggravated at elevated temperatures. Rubber gaskets and O-rings are especially vulnerable to compression set—the increase in compression set and attendant loss of resiliency may result in fluid leakage, contamination, etc. A need exists for a cure system for curable polyepichlorohydrin gum stocks which would reduce the tendency of such curable gum stocks to undergo scorch, and improve the heat aging and compression set of cured articles thereof.

The most generally useful cure system for epichlorohydrin polymer gums employs 2-mercaptoimidazoline and red lead (see Encyclopedia of Polymer Science and Technology, Vol. 6 (Interscience, New York, 1967) pp. 198—200). U.S.—A—3,726,841 discloses a process for accelerating the cross-linking of epihalohydrin polymers with halide salts of aliphatic quaternary ammonium and tetraalkyl phosphonium compounds. The cross-linking agents employed are various polyamines and certain heterocyclic compounds combined with certain metal compounds. U.S.—A—4,051,078 discloses a cure system for epichlorohydrin comprising a metal oxide with a valence state of two to five and certain polyhydroxy compounds with four or more —OH groups.

In the past, polyepichlorohydrin gums have found wide use in the manufacture of automotive hoses and seals. However, vulcanized articles made from such gums exhibit undesirable permeability to automotive fuels, thereby representing a significant source of hydrocarbon emissions from modern automobiles. Also, vulcanized articles made from polyepichlorohydrin can undergo reversion to their unvulcanized state upon exposure to hydroperoxides such as are commonly found in lead-free gasoline in cars equipped with recirculating fuel systems, see "Effect of Sour Gasoline on Rubber Hose", A Nasasian, Rubber and Plastics News, 26 June 1978, pp. 14—16.

In an effort to reduce hydrocarbon emissions and improve the resistance of automotive fuel system hoses and seals to degradation in the presence of hydroperoxides, automobile hose and seal manufacturers have begun to specify the use of fluoroelastomers for fuel system hoses and seals.

Fluoroelastomers exhibit outstanding resistance to hydrocarbon permeation and excellent stability in the presence of lead-free fuels. Fluoroelastomers actually have much better performance than is required for automotive use with respect to resistance to hydrocarbon permeation and stability in the presence of lead-free gasoline or sour gasoline. However, fluoroelastomers generally have poorer low temperature properties than currently used polyepichlorohydrin elastomers, that is, if temperatures drop, then fluoroelastomers lose their resilience and become brittle sooner than currently used polyepichlorohydrin elastomers. This loss of resilience at low temperatures can lead to fracture, leakage, or other failure of a hose or seal made from a fluoroelastomer when exposed to cold weather conditions commonly found in the continental United States and elsewhere. In addition, fluoroelastomers are generally much more expensive than commercially available polyepichlorohydrin elastomers.

Automobile seal and hose manufacturers have therefore sought to obtain a composition which combines the low hydrocarbon permeability and stability upon exposure to lead-free gasoline or sour gasoline that are characteristics of fluoroelastomers, with the good low temperature properties and low cost that are characteristics of polyepichlorohydrin elastomers. Current research has focused on combinations of various fluoroelastomers (of the polymethylene type having substituent fluoro groups on the polymer chain) with epichlorohydrin/ethylene oxide copolymer (hereinafter referred to by the ASTM

designation "ECO"), in preference to combinations of fluoroelastomers with epichlorohydrin homopolymer (hereinafter referred to by the ASTM designation "CO"), since ECO has superior low temperature properties. Two commercial approaches have been investigated by such manufacturers—(1) attempting to manufacture laminated articles containing one or more layers of polyepichlorohydrin elastomer bonded to one or more layers of fluoroelastomer, and (2) attempting to manufacture articles containing a blend of polyepichlorohydrin gum and fluoroelastomer gum.

In practice, it has been difficult to laminate curable polyepichlorohydrin gum stock to a curable gum stock containing fluoropolymer gum, and cure the resulting laminated article. Such laminated articles have required the use of an adhesion-promoting coating (i.e., a primer or adhesive) between the polyepichlorohydrin layer and the fluoropolymer layer in order to achieve good bonding and prevent delamination of the hose assembly, adding to the cost of manufacture of such laminated articles. A need exists for a compatible cure system which will enable fabrication of laminated articles containing a layer of curable polyepichlorohydrin gum stock disposed adjacent a layer of curable fluoroelastomer gum stock, without the need for an adhesion-promoting coating or other surface treatment between such layers. No cure system has been reported as meeting this need.

An additional need exists for curing systems which will enable polyepichlorohydrin gums and fluoroelastomer gums to be blended and cured, as such blends can be used to make automotive hoses and seals having good solvent resistance (compared to similar articles containing no fluoroelastomer) and low cost (compared to similar articles containing no polyepichlorohydrin). A few such systems have been reported. Peroxide cure systems for blends of an olefin-containing epichlorohydrin copolymer gum and a fluoropolymer gum are described in "Automotive Fuel Permeation Resistance—A Comparison of Elastomeric Materials", J. D. MacLachlan, presented to the Passenger Car Meeting, Society of Automotive Engineers, June, 1979 (Paper No. 79 0657). Also, a cure system for blends of a polyepichlorohydrin gum and fluoropolymer gum comprising an acid acceptor, certain tertiary amines, salts of those amines, or certain tertiary phosphines, and a fluorine-containing polyhydroxy compound have been described in U.K. Published Patent Specification No. 2,011,924 A.

Disclosure of invention

The present invention provides a curable gum stock composition comprising polyepichlorohydrin gum, polyphenol curing agent, and acid acceptor, characterized in that the mixture contains

(a) organoammonium, organoarsonium, or organophosphonium cocuring agent of the formula:

$$\text{(i)}\ (R^1)_4Q^{+1}(X^{-m})_{1/m}\ \text{or}$$

$$\text{(ii)}\ (R^1)_3QR^2Q(R^1)_3{}^{+2}(X^{-m})_{2/m}$$

wherein Q is a nitrogen, arsenic or phosphorus atom; X is an anion of valence m, each $R^1$ is a monovalent organic radical containing 1 to 20 carbon atoms, is the same as or different from any other $R^1$, and can combine with another $R^1$ to form a cyclic structure containing a Q atom; and $R^2$ is a divalent organic radical containing 2 to 12 carbon atoms; or

(b) organosulfonium cocuring agent of the formula:

$$\text{(i)}\ (R^3)_3S^{+1}(X^{-m})_{1/m}\ \text{or}$$

$$\text{(ii)}\ (R^3)_2SR^4S(R^3)_2{}^{+2}(X^{-m})_{2/m}$$

wherein S is sulfur; X is an anion of valence m; each $R^3$ is a monovalent organic radical containing 1 to 20 carbon atoms, is the same as or different from any other $R^3$, and can combine with another $R^3$ to form a cyclic structure containing an S atom; $R^4$ is a divalent organic radical containing 2 to 12 carbon atoms; and at least one $R^3$ or $R^4$ group is aromatic, and shaped and cured articles thereof.

The present invention also provides blended curable gum stock compositions containing the above ingredients and further characterized in that the blended curable gum stock also contains fluoropolymer gum. Shaped and cured articles containing such blended gum stocks are also provided in this invention.

Detailed description

In the practice of this invention, the polyepichlorohydrin gum is a solid, predominantly amorphous, high molecular weight (i.e., greater than about 40,000 number average molecular weight) epichlorohydrin homopolymer gum, copolymer gum containing epichlorohydrin with other cyclic ethers (for example, ethylene oxide, propylene oxide, 2-butene oxide, ethyl glycidyl ether, and trimethylene oxide), or blends of the above polymer gums. Generally useful copolymer gums will contain about 50 mol % of epichlorohydrin gum. Representative polyepichlorohydrins useful in this invention are described in U.S.—A—3,158,580, 3,158,581, and 3,726,841. Readily available commercial polymer gums include "Herclor H" epichlorohydrin homopolymer (see Hercules Inc. Technical Bulletin ORH-1D), "Hydrin 100" epichlorohydrin hopolymer (see B. F. Goodrich Chemical Co. Product Information Bulletin 6702-SPM), "Herclor C" epichlorohydrin-ethylene oxide copolymer (see Hercules Inc. Technical Bulletin ORH-1D) and

"Hydrin 200" epichlorohydrin-ethylene oxide copolymer (see B. F. Goodrich Chemical Co. Product Information Bulletin 6702-SPM).

The fluoropolymer gums which can be used in this invention comprise a copolymer of (1) terminally ethylenically unsaturated olefin which has 2 to 4 carbon atoms and can be homopolymerized by emulsion polymerization in the presence of a water soluble free radical catalyst such as $K_2S_2O_8$, and (2) at least one terminally ethylenically unsaturated fluoromonoolefin, each of the doubly bonded chain carbon atoms of said fluoromonoolefin being bonded to at least one fluorine atom substituent and any remaining valence of any chain carbon atoms of said fluoromonoolefin being satisfied by hydrogen, fluorine, chlorine or bromine, or a fluoroalkyl or fluoroalkoxy radical of 1 to 4 carbon atoms, with at least 10 percent of the chain carbon atoms of said copolymer being $—CH_2—$ units, at least 10 percent of the chain carbon atoms of said copolymer being bonded to alkyl or alkoxy radicals with the proviso that only one such radical is bonded to a given carbon atom, and with at least 50 percent of the total number of carbon-bonded moieties in said copolymer being fluorine atoms, but with no chain carbon atom of said copolymer being bonded to more than one chlorine or bromine atom.

Representative olefins which can be copolymerized with fluoromonoolefin to prepare such fluoropolymer copolymer gums, include ethylene, propylene, 1-butylene, isobutylene, 1,1-chlorofluoroethylene, butadiene, 2-chlorobutadiene, vinyl ethyl ether, vinyl chloride, vinyl acetate, and vinylidene fluoride. Vinylidene fluoride is a preferred olefin. Representative fluoromonoolefins which can be copolymerized with the above olefins include 1 - chloro - 1,2 - difluoroethylene, chlorotrifluoroethylene, 1,2 - dichloro - 1,2 - difluoroethylene, trifluoroethylene, tetrafluoroethylene, 1-hydroperfluoropropene ($CFH=CFCF_3$), hexafluoropropene, 2-chloroperfluoropropene, and fluorinated methylvinylethers (such as $CF_3OCF=CF_2$).

Said fluoropolymer gums and their preparation are known in the art and some of them are commercially available. Preferred fluoropolymer gums are those produced by copolymerizing 65 to 85 mol % vinylidene fluoride and 35 to 15 mol % hexafluoropropene as described in U.S.—A—3,051,677 and 3,318,854 and fluoropolymer gums produced by copolymerizing vinylidene fluoride with 10 to 35 mol % hexafluoropropene, and 15 to 25 mol % tetrafluoroethylene as described in U.S. Patent No. 2,968,649.

Fluoropolymer gums need not be included in the compositions of the present invention. The curable gum stock compositions of this invention which contain polyepichlorohydrin gum but no fluoroelastomer gum have substantial utility by themselves. Such compositions have excellent resistance to scorch and good shelf life. These curable gum stocks can be vulcanized into elastomeric articles, such as gaskets, O-rings or hose, having good physical properties, initially and after exposure to elevated temperatures, and having improved resistance to compression set when compared to conventionally cured polyepichlorohydrin gums. The curable polyepichlorohydrin gum stocks of this invention which contain no fluoropolymer gum can also be laminated to one or more layers of curable fluoropolymer gum stock, or one or more layers of curable, blended polyepichlorohydrin/fluoropolymer gum stock, and the resulting layered assembly then cured to form a laminated article containing a layer of cured polyepichlorohydrin gum, together with one or more layers of cured fluoropolymer gum and/or cured, blended polyepichlorohydrin/fluoropolymer gum.

The blended compositions of this invention which contain polyepichlorohydrin gum and fluoropolymer gum also have substantial utility. The amounts and types of polyepichlorohydrin gum and fluoropolymer gum can be adjusted to alter the properties of the final, cured article. For example, the type of polyepichlorohydrin gum used in such blended compositions affects the low temperature performance and high temperature resistance of cured articles made from such blends. Cured CO homopolymer and cured fluoropolymers retain useful properties down to approximately the same low temperature. Cured ECO copolymer retains useful properties down to lower temperatures, but is not stable to as high a temperature range as are cured CO or cured fluoropolymers. For blended compositions of this invention containing both polyepichlorohydrin gum and fluoropolymer gum, which when cured will be used at low temperatures, a greater amount of ECO gum should be used relative to the amount of fluoropolymer gum or CO gum. The higher the projected use temperature of such blended compositions, the greater the amount of fluoropolymer gum or CO gum which should be used relative to the amount of ECO gum.

The polyphenol curing agent can be any aromatic compound with two or more hydroxyl groups directly bonded to aromatic ring carbon atoms. Preferred compounds include polyhydroxy benzenes, naphthalenes, anthracenes, chromones, xanthones, anthraquinones, and polyphenols of the formula:

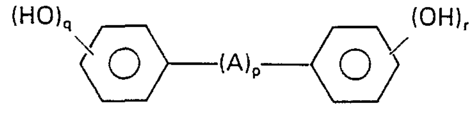

wherein p is 0 or 1; the sum (q+r) is 2 to 4 or more; and A is a thio, oxy, sulfinyl, sulfonyl or carbonyl radical, or a divalent organic radical containing 1 to 13 carbon atoms.

The polyphenol curing agent can optionally be substituted with moieties which do not interfere with the functioning of the compound as a curing agent in the practice of this invention. Unsubstituted polyphenol curing agents are preferred. Salts of the above polyphenols or other derivatives which

decompose or rearrange into the above polyphenols can be used. Mixtures of more than one of the above polyphenols may be used in this invention.

Representative polyphenols useful in this invention include hydroquinone, 2-methyl hydroquinone, 2,5-dimethyl hydroquinone, 2-t-butyl hydroquinone, resorcinol, 2-methyl resorcinol, 5-methyl resorcinol, 2,4 - dibenzoylresorcinol, catechol, 2,4 - dihydroxyacetophenone, 1,5 - dihydroxynaphthalene, 9,10 - dihydroxyanthracene, 1,4,9,10 - tetrahydroxyanthracene, 3,6 - dihydroxyxanthone, 2,6 - dihydroxyanthraquinone, 4,4′ - dihydroxydiphenylsulfoxide, 4,4′ - dihydroxydiphenylsulfone (Bisphenol S), 1,1 - cyclohexylidene - bis(4 - hydroxybenzene), 2 - chloro - 1,4 - cyclohexylene - bis(4 - hydroxybenzene), 2,2 - isopropylidene - bis(4 - hydroxybenzene) (Bisphenol A), hexafluoroisopropylidene - bis(4 - hydroxybenzene) (Bisphenol AF), 2,4′ - dihydroxybenzophenone, 4,4′ - dihydroxybenzophenone, 2,2′,4,4′ - tetrahydroxybenzophenone, and 2 - fluoro - 1,4 - phenylene - bis(4 - hydroxybenzene). Bisphenol S is a preferred polyphenol but others may be chosen by those skilled in the art in order to provide selected curing characteristics for particular applications.

The organo-onium cocuring agent is an organoammonium, organoarsonium or organophosphonium compound of the formula

$$(R^1)_4Q^{+1}(X^{-m})_{1/m} \qquad \text{I}$$

or

$$(R^1)_3QR^2Q(R^1)_3{}^{+2}(X^{-m})_{2/m} \qquad \text{II}$$

wherein Q is a nitrogen, arsenic, or phosphorus atom; X is an anion of valence m; each $R^1$ is a monovalent organic radical which is the same as or different from any other $R^1$, can combine with another $R^1$ to form a cyclic structure containing a Q atom, and contains from 1 to about 20 carbon atoms, can have a carbon skeletal chain which is linear, branched or cyclic and is saturated, unsaturated or aromatic, which chain can contain hetero skeletal atoms other than carbon (e.g., oxygen or sulfur) and can be unsubstituted or substituted with moieties which do not interfere with the functioning of the compound as a cocuring agent; and $R^2$ is a divalent organic radical containing from 2 to 12 (preferably 2 to 8) carbon atoms.

The organo-onium cocuring agent can also be an organosulfonium compound of the formula

$$(R^3)_3S^{+1}(X^{-m})_{1/m} \qquad \text{III}$$

or

$$(R^3)_2SR^4S(R^3)_2{}^{+2}(X^{-m})_{2/m} \qquad \text{IV}$$

wherein S is sulfur; X is an anion of valence m; each $R^3$ is a monovalent organic radical which is the same as or different from any other $R^3$, can combine with another $R^3$ to form a cyclic structure containing an S atom, contains from 1 to about 20 carbon atoms, can have a carbon skeletal chain which is linear, branched, or cyclic and is saturated, unsaturated or aromatic, which chain can contain hetero skeletal atoms other than carbon (e.g., oxygen or sulfur) and can be unsubstituted or substituted with moieties which do not interfere with the functioning of the compound as a cocuring agent; $R^4$ is a divalent organic radical having from 2 to 12 (preferably 2 to 8) carbon atoms; and at least one $R^3$ or $R^4$ group is aromatic.

Mixtures of more than one of the above organo-onium cocuring agents can be used in this invention.

In the above organo-onium cocuring agent formulas, suitable anions X include chloride, bromide, sulfate, bisulfate, nitrate, hydroxide, carbonate, perchlorate, trifluoromethane sulfonate, acetate, benzene sulfonate, phenate, tetrafluoroborate, hexachlorophosphate, hexafluorophosphate, hexachlorostannate, hexafluoroarsenate, and hexafluoroantimonate.

In the above formulas, preferably $R^1$ and $R^3$ are alkyl, alkenyl, cycloalkyl, phenyl, or combinations thereof, and $R^2$ and $R^4$ are alkylene, phenylene or combinations thereof such as phenylenedialkylene with at least one of $R^3$ and $R^4$ containing an aromatic nucleus with 6 ring-carbon atoms. The $R^1$, $R^2$, $R^3$, or $R^4$ groups can contain substituents which do not interfere with the function of the compound as a cocuring agent, such as halo, alkoxy, alkylthio, phenylthio, carboalkoxy, acetoxy, and acetamido. Most preferably $R^1$, $R^2$, $R^3$ and $R^4$ are unsubstituted. In general, organophosphonium compounds are preferred as cocuring agents due to their ready availability.

Representative organo-onium cocuring agent compounds include:

$(CH_3)_4N^+OH^-$, $(C_4H_9)_4N^+Br^-$, $(HOCH_2CH_2)_3N^+CH_3I^-$,

$HO^-(C_4H_9)_3N^+CH_2CH_2N^+(C_4H_9)_3OH^-$, $(C_2H_5)_3(C_6H_5)N^+Br^-$,

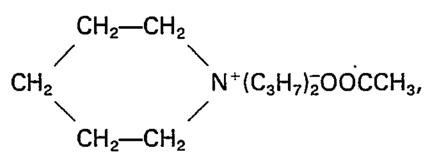

$(C_8H_{17})_3(CH_2{=}CHCH_2)N^+BF_4^-$, $(C_4H_9)_3(CF_3CH_2)N^+(SO_4^{-2})_{1/2}$,

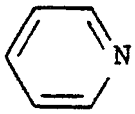 $(C_2H_5)^+Br^-$, $(CH_3)_4As^+OH^-$, $(C_6H_5)_4As^+Cl^-$,

$(CH_3)_2(C_2H_5)_2P^+Cl^-$, $(C_2H_5)_3(C_{18}H_{37})P^+Br^-$,

$(C_3H_7)_3(cyclo\text{-}C_6H_{11})P^+OH^-$, $(C_4H_9)_3(CH_2{=}CHCH_2)P^+Cl^-$,

$(C_6H_5)_3(C_6H_5CH_2)P^+Cl^-$, $(C_6H_5)_3(C_6H_5COCH_2)P^+Br^-$,

$(C_8H_{17})_3(CH_3OCH_2CH_2)P^+NO_3^-$,

$Cl^{-+}(C_6H_5)_3PCH_2C_6H_4CH_2P(C_6H_5)_3^+Cl^-$, 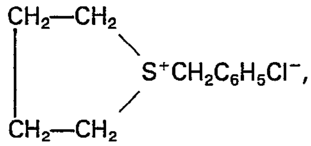

$(C_6H_5)_3S^+Cl^-$, $(C_6H_5)_3S^+(SO_4^{-2})_{1/2}$, $(C_6H_5)_3S^+PF_6^-$,

$(C_6H_5)_2(CH_3)S^+BF_4^-$,

diphenylnaphthylsulfonium, trifluoromethanesulfonate, tritolylsulfonium nitrate, anisyldiphenylsulfonium hexafluoroantimonate, 4 - butoxyphenyldiphenylsulfonium tetrafluoroborate, 4 - chlorophenyldiphenylsulfonium acetate, tris(4 - phenoxyphenyl)sulfonium hydroxide, di(4 - ethoxyphenyl)methylsulfonium hexafluoroarsenate, 4 - acetoxy - phenyldiphenylsulfonium carbonate, tris(4 - thiomethoxyphenyl)sulfonium hexafluorophosphate, di(methoxysulfonylphenyl)methylsulfonium chloride, di(methoxynaphthyl)methylsulfonium tetrafluoroborate, tris(carbomethoxyphenyl)sulfonium hexafluorophosphate, and 4 - acetamidophenyldiphenylsulfonium perchlorate.

Synthetic routes to the above organo-onium compounds are well known and are described, for example, in "Concerning Amines", David Ginsburg, (Pergamon Press, New York, 1967) page 73; "Pseudohalo Metal Compounds XVIII", Beck et al, *Chem Ber, 100*, 2335-61 (1967) (arsenic), "Organic Phosphorus Compounds", G. M. Kosolapoff and L. Maier, (Wiley-Interscience, New York, 1972), Vol. 2, page 189; J. Org. Chem., G. H. Wiegand, et al, *33*, 2671-75 (1968) (sulfur); J. Org. Chem., K. Ohkubo, et al, *36*, 3149-55 (1971) (sulfur); "Topics in Sulfur Chemistry", J. P. Marino, (Georg Thieme, Stuttgart, 1976) page 32; and U.S. Patent 2,807,648.

Prior to curing, an acid acceptor (preferably an inorganic base) is added to the gum stock to provide a curable gum stock or compound. Suitable acid acceptors include lead-based compounds, calcium hydroxide, and magnesium oxide. Mixtures of more than one acid acceptor can be used in this invention. Preferred acid acceptors are lead-based compounds such as dibasic lead phosphite, dibasic lead phthalate, tribasic lead maleate monohydrate, tribasic lead fumarate, and white lead (PbO).

Other gum stock ingredients commonly used as compounding adjuvants for polyepichlorohydrin gums and for fluoropolymer gums can also be included in the gum stock prior to curing, such as one or more heat stabilizers (additives which improve retention of physical properties at elevated temperatures such as phenyl - beta - naphthyl - amine, N,N' - di - beta - naphthyl - p - phenylenediamine, N - isooctyl - p - aminophenol, polymerized 2,2,4 - trimethyl - 1,2 - dihydroquinoline, nickel dibutyldithiocarbamate and nickel dimethyldithiocarbamate), processing aids, lubricants, plasticizers, and fillers (e.g., high surface carbon blacks and amorphous silicas. Organic primary monoamines and polysecondary (e.g., disecondary) amines are preferred heat stabilizers. Blended gum stock compositions of the present invention which contain ECO copolymer preferably contain at least one organic primary monoamine is a heat stabilizer. Suitable organic primary monoamines include octyl amine and octadecyl amine. In general, as the amount of CO or ECO is increased in a blended composition of the present invention, a greater amount of heat stabilizer is needed to maintain the elevated temperature stability of the final cured article. If a cured blended composition of the present invention has a proposed use at temperatures in excess of about 200°C, i.e., if it has a high concentration of fluoroelastomer, then the amount of heat stabilizer used should be held to a minimum consistent with good retention of physical properties after aging. If more than this amount of heat stabilizer is used in such compositions, then the final cured article will actually have decreased stability at elevated temperatures.

The amounts of polyepichlorohydrin gum, optional fluoropolymer gum, polyhydroxy curing agent, acid acceptor, organo-onium cocuring agent, and any compounding adjuvants used, will depend upon the proposed application and desired cure characteristics. As mentioned above, use of ECO copolymer in a blended composition of the present invention is preferred where improved low temperature properties are of major concern in the final cured article. CO homopolymer should be used in a blended composition of the present invention where improved high temperature properties are more important in the final cured

article. Also, as the amount of fluoropolymer gum is increased in a blended composition of the present invention, the stability of that composition at elevated temperatures is improved. In general, many of the properties of a cured blended composition of the present invention will be intermediate between the physical properties, when cured, of the individual gumstocks used to make the blend composition.

Whether the composition of the invention contains polyepichlorohydrin gum and no fluoropolymer gum or contains a blend of polyepichlorohydrin gum and fluoropolymer gum, a lower concentration of polyphenol curing agent in the gum stock generally will produce a lower crosslink density and lower modulus in the cured compound, while a higher concentration of polyphenol curing agent generally will produce higher crosslink density and higher modulus. Low concentrations of organo-onium cocuring agent and acid acceptor will produce slower cures. Suitable concentration ranges for producing a useful cured product are shown below. The term "parts" refers to parts by weight of polyepichlorohydrin gum or fluoropolymer gum. The term "phr" refers to parts per hundred parts of the total weight of polyepichlorohydrin gum plus fluoropolymer gum. The term "mmhr" refers to millimoles per hundred grams of polyepichlorohydrin gum plus fluoropolymer gum.

| Gum stock component | Amount | |
|---|---|---|
| polyepichlorohydrin gum | 100 to 1 parts | total 100 parts |
| fluoropolymer gum | 0 to 99 parts | |
| polyphenol curing agent | 0.3 to 15 mmhr | |
| acid acceptor | 0.5 to 40 phr | |
| organo-onium cocuring agent | 0.2 to 7.5 mmhr | |

Compounding adjuvants may be added in conventional quantities, e.g., heat stabilizers at 0.1 to 20 phr, and preferably at 0.5 to 10 phr.

The addition of conventional amine curing agents (e.g., hexamethylene diamine) ordinarily should be avoided. The presence of such amines tends to slow down the cure rate and degrade the storage life, heat aging and compression set of the compositions of the present invention.

Mixing of the above components and additives can be carried out in any order. For a composition of this invention which contains polyepichlorohydrin gum but no fluoropolymer gum, it may be convenient to mill polyphenol curing agent and organo-onium cocuring agent into polyepichlorohydrin gum, forming a gum stock. For a blended composition of the present invention containing polyepichlorohydrin gum and fluoropolymer gum, it may be convenient to mill polyepichlorohydrin gum and fluoropolymer gum together and then mill into this mixture polyphenol curing agent and organo-onium cocuring agent, forming a gum stock. The above gum stocks will have an extended storage life at room temperature, e.g., one year or more. Prior to curing, the acid acceptor(s) are milled into either of the above gum stocks (forming a curable gum stock), after which the room temperature shelf life is more limited, e.g., to a few months. Additives can be milled into such gum stocks or such curable gum stocks at any time prior to curing.

Variations on the above mixing schemes can be used, e.g., the polyphenol curing agent, organo-onium cocuring agent, and the acid acceptor can be admixed and later combined with polyepichlorohydrin gum or fluoropolymer gums. Masterbatch techniques can be used in preparing such curable gum stocks. For example, a masterbatch may be prepared by combining 100 parts (by weight) of polyepichlorohydrin gum or fluoropolymer gum or a blend of these gums (e.g., 1 to 99 parts polyepichlorohydrin gum with 99 to 1 parts fluoropolymer gum) with about 100 to 900 parts of curing agent, and with about 100 to 900 parts of cocuring agent, and the resulting masterbatch later combined with the requisite balance of polyepichlorohydrin gum or fluoropolymer gum or a blend of these gums to form a gum stock composition. Alternatively, the polyphenol curing agent can be mixed into a carrier (at a concentration of about 100 to 900 parts of curing agent in 100 parts of carrier) to provide a first masterbatch and the organo-onium cocuring agent can be separately mixed into a carrier (at a concentration of about 100 to 900 parts of cocuring agent in 100 parts of carrier) to form a second masterbatch, and the first and second masterbatches later milled into the desired polymer gums in desired proportions to prpeare a gum stock, to which acid acceptor is subsequently added to form a curable gum stock. This latter masterbatch technique allows convenient adjustment by the use of the amount of each component in the gum stock and helps ensure thorough dispersion of the components in the gum stock. In addition, mixing either the polyphenol curing agent or the organo-onium cocuring agent with a carrier reduces the likelihood that hazardous or environmentally deleterious substances will be released into the atmosphere during mixing, since some of these components are in the form of a dusty, powdered solid. Suitable carriers include polyepichlorohydrin gum, fluoropolymer gum, neoprene, chlorosulfonated polyethylene, chlorinated polyethylene, and

ethylene-propylene copolymer. Said polyepichlorohydrin gum and fluoropolymer gum (e.g., said 65—85:35—15 mol % vinylidene fluoride:hexafluoropropylene copolymer) are the preferred carriers.

Mixing of the gum stock components can be carried out using any of the usual rubber mixing devices, such as Banbury mixers, roll mills, or any other convenient mixing device. It has been found that a two-roll rubber mill equipped with heat exchange means, e.g., cored chambers for cooling, is particularly suitable since the heat generated by the high shearing forces in mixing can be dissipated and the temperature more accurately regulated with this device than with devices providing other means for temperature control. The temperature of the mixture on the mill generally should not be allowed to rise above about 120°C. The mixture should be milled sufficiently to distribute the cross-linking agents and other ingredients throughout the gum stock. About 5 to 20 minutes or longer is recommended for this process.

The curable gum stock is shaped by molding or extruding, then thermally cured into a useful elastomeric product. By "elastomeric" is meant the ability of the cured vulcanizate, when slowly stretched at room temperature to at least twice its original length and released, to return rapidly to essentially its original length.

Forming a shaped article by molding typically comprises pressing the curable gum stock in a hot mold, releasing the shaped part from the mold, and (to develop optimum properties) subsequently post curing the part in an oven. The mold can first be coated with a release agent, such as a silicone oil. Molding can be carried out at a temperature between about 95°C and about 230°C, preferably between about 150°C and about 205°C, for a period of from about 1 minute to 15 hours, usually from 5 minutes to 30 minutes, and at a pressure of between about 0.7 MPa and about 20.6 MPa, preferably between about 3.4 MPa and about 6.8 MPa. The vulcanized molded article can be post cured at a temperature between about 120°C and about 230°C, usually at about 150°C to 200°C, for a period of from about 4 hours to 24 hours or more depending on the cross-sectional thickness of the sample. For thick sections, the temperature during the post cure usually is raised gradually from the lower limit of the range to the desired maximum temperature selected. For thinner sections, e.g., less than 5 mm, the section can be put into the oven at the desired maximum temperature.

Alternatively, the curable gum stock can be shaped by extrusion rather than molding. Extrusion typically comprises heating the curable gum stock to a temperature of about 100°C and forcing it through a suitable die or orifice at a pressure of between about 330 MPa and about 400 MPa. The shaped extrudate can then be press cured as above, or, alternatively, steam autoclaved at a temperature of between about 135°C and about 160°C, for a period from about 30 minutes to 4 hours. The vulcanized extruded article can then be post cured in the same manner as a molded article.

Shaped layered or laminated articles of this invention made of polyepichlorohydrin gum and fluoropolymer gum are prepared as follows. Such gums, taken singly or blended together as described above, can be prepared as curable compositions and shaped as sheets or the like and the shaped parts laid up together, and the layup then subjected to heat and pressure to produce a laminated article without requiring the use of an adhesion-promoting coating between the layers. Laminating may be carried out at a pressure of about 0.3 to 20 MPa and preferably at about 0.5 to 10 MPa. In one aspect thereof, such an article can comprise a first layer in the form of a sheet, cylinder, or the like. In a first embodiment, said first layer can be a laminate of a first sublayer of curable gum stock (wherein the gum is said polyepichlorohydrin gum) disposed adjacent a second sublayer of curable gum stock (wherein the gum is said fluoropolymer gum). Alternatively, in a second embodiment, said first layer can be a curable gum stock containing the above-described blend of polyepichlorohydrin gum and fluoropolymer gum. In each of said first and second embodiments, one or both sides of said first layer (e.g., one or both faces in the case of a sheet, and the inner and/or outer surfaces in the case of a cylinder) is disposed adjacent one or more second layers, each of which second layers is a curable gum stock wherein the gum is said polyepichlorohydrin gum or said fluoropolymer gum, or the gum in said second layer is said blend of polyepichlorohydrin gum and fluoropolymer gum, each second layer being the same as or different from said first layer and any other of said second layers (when present). The resulting layered article, when cured, has a strong layer-to-layer bond formed without the need for an adhesion-promoting coating at the interface between contiguous layers or sublayers.

Thus, if said first layer in the resulting cured article is a laminate of said first sublayer of polyepichlorohydrin and said second sublayer of fluoroelastomer, then the cured article will have two sublayers (within a single first layer) and one or more of said second layers. And if said first layer in the resulting cured article is a blend of polyepichlorohydrin elastomer and fluoroelastomer, then the cured article will have a blended first layer and one or more of said second layers.

In an additional aspect of this invention, shaped layered articles are provided consisting essentially of a layer of curable polyepichlorohydrin gum stock disposed adjacent a layer of curable fluoropolymer gum stock, the resulting article, when cured, having a strong layer-to-layer bond formed without the need for an adhesion-promoting coating at the interface between the elastomeric layers. The resulting article has only two layers, neither of which is a blend.

The curable gum stocks in layers and sublayers of the layered articles described above contain the gums recited above plus polyphenol curing agent, acid acceptor, organo-onium cocuring agent, and any optional compounding adjuvants. Layered articles are prepared by mixing a curable gum stock for each layer or sublayer, using mixing techniques as outlined above in the discussion of uniformly blended

articles of the present invention. The individual curable gumstocks are then placed into a mold or coextruded, using techniques well known in the art, and then cured as described above in the discussion of uniformly blended articles of the present invention.

Upon curing, the contiguous layers adhere to one another, forming a strong layer-to-layer bond whose strength at the bond line equals or exceeds the strength of the individual layers themselves. The layers are thereby joined without the need for an additional adhesion promoting coating between them. For example, a layered fuel hose assembly may be prepared by extruding a thin-walled cylindrical inner liner of fluoropolymer gum stock, covering that liner with a thick-walled coaxial cylindrical sheath of CO gum stock, and covering that sheath with a thin-walled coaxial cylindrical cover made from a gum stock containing a blend of ECO and fluoropolymer gums. After cure, the resulting hose assembly would have low hydrocarbon permeation due to the inner fluoroelastomer liner layer, good oil and solvent resistance due to the outer ECO/fluoroelastomer elastomer blended cover layer, and moderate cost due to the thick intermediate CO elastomer layer. In cross-section, such a hose assembly would have a hollow core and five concentric annulli or rings of cured elastomer—the three principal elastomer layers mentioned above, plus the two interfaces between contiguous principal layers.

Other laminated articles, such as gaskets, tank lining, and seals, can also be prepared in accordance with this invention.

Shaped articles of the present invention may also be prepared by laminating a curable gum stock of this invention to another elastomer (e.g., neoprene), for example by using a suitable primer or adhesive between the two elastomer layers.

The following examples are offered to aid understanding of the present invention. Curing characteristics are reported under the heading "Rheometer". Data were obtained in accordance with ASTM D 2084-75 using a Monsanto Oscillating Disk Rheometer Model MP-V, with a 20 second preheat, a 100 cpm oscillator frequency, and a 3° arc.

Resistance to scorch is reported under the heading "Mooney Scorch". Data were obtained in accordance with ASTM D 1646-74 using a Scott Testing Inc. Mooney Viscometer Model ST1, with a 1 minute preheat and a small rotor at 121°C.

Physical properties of press cured and post cured samples are reported under the headings "Press cure" and "Post cure". Samples were in the form of 150×150×1.8 mm sheets and were pressed at about 5 MPa at the indicated conditions. After measurement of the indicated physical properties, portions of the samples were then post cured in an oven at the indicated conditions, and physical properties re-measured. Measurements were in accordance with ASTM D 412-75 using an Instron Tensile Tester, Method "A", using dumbell samples cut from 1.8 mm sheet with die "C".

Resistance to heat aging is reported under the heading "Accelerated aging of post cured sample". Data were obtained in accordance with ASTM D 412-75 (as above) and ASTM D 573-72.

Low temperature properties are reported under the heading "Low temperature retraction". Data were obtained in accordance with ASTM D 1329-72, and are reported as the temperature at which a frozen sample retracted 10 percent from a specified elongation.

Resistance to degradation upon exposure to solvents is reported under the heading "Volume swell". Data were obtained in accordance with ASTM D 1460-68, using ASTM #3 oil, as well as Reference Fuel "C" (a 50% aliphatic, 50% aromatic test fuel).

Resistance to compression set is reported under the heading "Compression set, O-rings". Data were obtained in accordance with ASTM D 395-69 (reapproved 1975), Method B using type "1" O-rings with a 3.53 mm cross section, subjected to 25% compression at the indicated conditions.

Example 1

Epichlorohydrin (CO) homopolymer was milled on a two-roll mill with a polyphenol, a tetraorganophosphonium salt, an acid acceptor, a filler, and two conventional heat stabilizers to form a curable gum stock. The ingredients were milled by putting the gum on the mill, adding the curing and cocuring agents as a group, adding all other ingredients as a group, and cutting the mixture back and forth until all ingredients were well dispersed. The curable gum stock was then molded and cured as indicated. The cure characteristics of the curable gum stock and the mechanical properties of the cured elastomer were determined before and after accelerated aging. Compression set data were also obtained. The composition of the curable gum stock and the above mentioned mechanical properties are set forth in Table I (as "Example 1") together for purposes of comparison with corresponding data on the same polymer gum using a conventional curing system (as "Comparison Run"). A low tendency to scorch, more rapid cure, superior aging properties and improved compression set values are shown for the novel composition of Example 1.

TABLE I

| Ingredient | Example 1 | Comparison run |
|---|---|---|
| Polymer gum[a] (parts) | 100 | 100 |
| Bisphenol S[b] (mmhr) | 6.25 | — |
| 2-Mercaptomidazoline[c] (mmhr) | — | 9.8 |
| $(n-C_4H_9)_3(CH_2=CHCH_2)P^+Cl^-$ (mmhr) | 3.5 | — |
| $PbHPO_3$[d] (phr) | 12 | 5 |
| Dibasic lead phthalate[e] (phr) | — | 7 |
| ASTM N-550 Carbon black[f] (phr) | 30 | 30 |
| Nickel dibutyldithiocarbamate[g] (phr) | 1 | 1 |
| Nickel dimethyldithiocarbamate[h] (phr) | 1 | 1 |

[a]"Hydrin 100", epichlorohydrin homopolymer, commercially available from B. F. Goodrich Chemical Co.
[b]4,4'-dihydroxydiphenylsulfone.
[c]"Na-22", commercially available from E. I. duPont de Nemours & Co.
[d]"Dyphos", commercially available from National Lead Co.
[e]"Dythal", commercially available from National Lead Co.
[f]"Philblack A", commercially available from Phillips Chemical Co.
[g]"Butyl Niclate", commercially available from R. T. Vanderbilt Co.
[h]"Methyl Niclate", commercially available from R. T. Vanderbilt Co.

TABLE I (contd.)

| | Example 1 | Comparison run |
|---|---|---|
| Rheometer, 160°C: | | |
| $M_L$ (N · m) | 0.40 | 0.40 |
| $M_H$ (N · m) | 8.9 | 6.1 |
| Min. to $M_H$ | 36 | 36 |
| $t_{sl}$ | 5.9 | 4.2 |
| $t'_c$ (90) | 26 | 29 |
| Rheometer, 177°C: | | |
| $M_L$ (N · m) | 0.40 | 0.34 |
| $M_H$ (N · m) | 9.8 | 7.3 |
| Min to $M_H$ | 24 | 25 |
| $t_{sl}$ | 4.3 | 3.0 |
| $t'_c$ (90) | 13.5 | 17 |
| Mooney Scorch, 121°C: | | |
| Minimum viscosity | 10[h] | 11 |
| Minutes to 10 point rise | >25[h] | 22.5 |
| Point rise in 25 min. | 0[h] | 13 |
| Press cure, 15 min., 177°C: | | |
| Tensile (MPa) | 15.16 | 15.16 |
| 100% Modulus (MPa) | 3.79 | 2.20 |
| Elongation at break (%) | 405 | 700 |
| Hardness (Shore A-2) | 69 | 61 |
| Post cure, 16 hr., 149°C: | | |
| Tensile (MPa) | 17.22 | 17.91 |
| 100% Modulus (MPa) | 4.82 | 5.34 |
| Elongation at break (%) | 300 | 260 |
| Hardness (Shore A-2) | 76 | 73 |

[h]No change after 8 weeks storage at room temperature.

TABLE I (contd.)

Accelerated aging of post cured sample—tensile (MPa):

| | 149°C | | 163°C | |
|---|---|---|---|---|
| Time | Example 1 | Comparison run | Example 1 | Comparison run |
| 1 day | 16.91 | 17.87 | 17.00 | 18.04 |
| 3 days | 16.81 | 16.78 | 13.72 | 15.73 |
| 1 week | 15.17 | 15.92 | 8.25 | 6.65 |
| 2 weeks | 9.12 | 8.83 | 3.33 | * |
| 3 weeks | 4.55 | 1.18 | 1.95 | * |
| 4 weeks | 3.62 | * | 1.09 | * |
| 5 weeks | 3.41 | * | 0.78 | * |
| 6 weeks | 2.52 | * | * | * |

Accelerated aging of post cured sample—100% modulus (MPa:)

| | 149°C | | 163°C | |
|---|---|---|---|---|
| Time | Example 1 | Comparison run | Example 1 | Comparison run |
| 1 day | 6.02 | 6.13 | 6.42 | 6.75 |
| 3 days | 6.78 | 6.80 | 6.50 | 5.97 |
| 1 week | 6.62 | 7.74 | 3.62 | 2.69 |
| 2 weeks | 3.79 | 3.51 | 1.87 | * |
| 3 weeks | 2.43 | 0.87 | 1.32 | * |
| 4 weeks | 2.00 | * | 0.83 | * |
| 5 weeks | 1.50 | * | * | * |
| 6 weeks | 1.10 | * | * | * |

*too weak to test.

TABLE I (contd.)

Accelerated aging of post cured sample—elongation at break (%):

| | 149°C | | 163°C | |
|---|---|---|---|---|
| Time | Example 1 | Comparison run | Example 1 | Comparison run |
| 1 day | 267 | 233 | 240 | 220 |
| 3 days | 237 | 200 | 200 | 200 |
| 1 week | 200 | 183 | 250 | 287 |
| 2 weeks | 240 | 225 | 250 | * |
| 3 weeks | 250 | 200 | 255 | * |
| 4 weeks | 250 | * | 280 | * |
| 5 weeks | 250 | * | * | * |
| 6 weeks | 250 | * | * | * |

Accelerated aging of post cured sample—hardness (Shore A-2):

| | 149°C | | 163°C | |
|---|---|---|---|---|
| Time | Example 1 | Comparison run | Example 1 | Comparison run |
| 1 day | 76 | 76 | 79 | 78 |
| 3 days | 78 | 79 | 79 | 78 |
| 1 week | 80 | 79 | 72 | 64 |
| 2 weeks | 74 | 72 | 65 | 35 |
| 3 weeks | 70 | 55 | 60 | * |
| 4 weeks | 66 | * | 77 | * |
| 5 weeks | 70 | * | 55 | * |
| 6 weeks | 62 | * | * | * |

*too weak to test.

Compression set, O-rings (%):

| | Example 1 | Comparison run |
|---|---|---|
| 72 hrs. at 121°C | | |
| Press cured, 15 min., 177°C | 17 | 65 |
| Post cured, 24 hrs., 149°C | 13 | 25 |
| 72 hrs. at 135°C | | |
| Press cured, 15 min., 177°C | 33 | 78 |
| Post cured, 24 hrs., 149°C | 28 | 42 |
| 72 hrs. at 149°C | | |
| Press cured, 15 min., 177°C | 47 | 89 |
| Post cured, 24 hrs., 149°C | 44 | 77 |

Examples 2 through 11

In a series of 10 runs polyepichlorohydrin gum (as used in Example 1) was compounded with polyphenol curing agent, various cocuring agents, an acid acceptor, a filler, and two conventional heat stabilizers. The resulting curable gum stock compositions were mixed, cured, and evaluated as in Example 1. Curing characteristics of the several compositions are set forth in Table II.

TABLE II

| Ingredient | Example | | | | | | |
|---|---|---|---|---|---|---|---|
| | 2 | 3 | 4 | 5 | 6 | 7 | 8 |
| Polymer gum (parts) | 100 | 100 | 100 | 100 | 100 | 100 | 100 |
| Bisphenol S (mmhr) | 6.25 | 6.25 | 6.25 | 6.25 | 6.25 | 6.25 | 6.25 |
| $(n\text{-}C_4H_9)_3(CH_2{=}CHCH_2)P^+Cl^-$ (mmhr) | 3.6 | | | | | | |
| $(C_6H_5)_3P^+(C_2H_5)I^-$ (mmhr) | | 3.6 | | | | | |
| $(n\text{-}C_4H_9)_4P^+Cl^-$ (mmhr) | | | 3.6 | | | | |
| $(C_6H_5)_3(C_6H_5CH_2)P^+Cl^-$ (mmhr) | | | | 3.6 | | | |
| $(C_6H_5)_3(C_6H_5COCH_2)P^+Br^-$ (mmhr) | | | | | 3.6 | | |
| $(n\text{-}C_4H_9)_4N^+OH^-$ (mmhr) | | | | | | 3.6 | |
| $(C_6H_5)\ (C_6H_5CH_2)\ (CH_3)S^+Br^-$ (mmhr) | | | | | | | 3.6 |
| $PbHPO_3$ (phr) | 12 | 12 | 12 | 12 | 12 | 12 | 12 |
| ASTM N-550 Carbon black (phr) | 30 | 30 | 30 | 30 | 30 | 30 | 30 |
| Nickel dibutyldithiocarbamate (phr) | 1 | 1 | 1 | 1 | 1 | 1 | 1 |
| Nickel dimethyldithiocarbamate (phr) | 1 | 1 | 1 | 1 | 1 | 1 | 1 |
| Rheometer, 177°C: | | | | | | | |
| $M_L$ (N · m) | 0.23 | 0.34 | 0.34 | 0.34 | 0.23 | 0.45 | 0.0 |
| $M_H$ (N · m) | 9.83 | 9.83 | 9.83 | 10.28 | 6.55 | 9.72 | 5.10 |
| Min. to $M_H$ | 24 | 24 | 24 | 24 | 36 | 24 | 48 |
| $t_{sl}$ | 6 | 5 | 6.2 | 5.8 | 7.5 | 4.5 | 23 |
| $t'_c$ (90) | 13.3 | 10.2 | 12.7 | 14.0 | 30 | 13.5 | 43 |

TABLE II (contd.)

| Ingredient | Example 9 | Example 10 | Example 11 |
|---|---|---|---|
| Polymer gum (parts) | 100 | 100 | 100 |
| Bisphenol S (mmhr) | 6.25 | 6.25 | 6.25 |
| $(n\text{-}C_4H_9)_4N^+Br^-$ (mmhr) | 3.6 | | |
| $(CH_3C_6H_4)_3S^+Cl^-$ (mmhr) | | 3.6 | |
| $(C_6H_5)_4As^+Cl$ (mmhr) | | | 3.6 |
| $PbHPO_3$ (phr) | 12 | 12 | 12 |
| ASTM N-550 Carbon black (phr) | 30 | 30 | 30 |
| Nickel dibutyldithiocarbamate (phr) | 1 | 1 | 1 |
| Nickel dimethyldithiocarbamate (phr) | 1 | 1 | 1 |
| Rheometer, 177°C: | | | |
| $M_L$ (N · m) | 0.23 | 0.11 | 0.11 |
| $M_H$ (N · m) | 8.70 | 8.48 | 9.60 |
| Min. to $M_H$ | 24 | 24 | 24 |
| $t_{sl}$ | 6.0 | 5.4 | 4.5 |
| $t'_c$ (90) | 11.5 | 20.0 | 10.2 |
| Mooney Scorch, 121°C: | | | |
| Minimum viscosity | 2 | 2 | — |
| Minutes to 10 point rise | >25 | >25 | — |
| Point rise in 25 min. | 0 | 0 | — |
| Compression set, O-rings (%): 72 hrs at 121°C | | | |
| Press cured, 11.5 min, 177°C | 24.1 | | — |
| Press cured, 20 min, 177°C | | 25.7 | — |
| Post cured, 24 hrs, 149°C | 22.2 | 20.4 | — |

Examples 12 through 16

In a series of 5 runs polyepichlorohydrin gum (as used in Example 1) was compounded with various polyphenol curing agents, a tetraorganophosphonium cocuring agent, an acid acceptor, and a filler. The resulting curable gum stock compositions were mixed, cured, and evaluated as in Example 1.

Curing characteristics of each formulation are set forth in Table III. All polyphenols were effective and gave good cures, although cure rates varied.

TABLE III

| | Example | | | | |
|---|---|---|---|---|---|
| Ingredient | 12 | 13 | 14 | 15 | 16 |
| Polymer gum (parts) | 100 | 100 | 100 | 100 | 100 |
| Hydroquinone (mmhr) | 6.25 | | | | |
| Bisphenol A[a] (mmhr) | | 6.25 | | | |
| 4,4'-$HOC_6H_4COC_6H_4OH$ (mmhr) | | | 6.25 | | |
| Bisphenol S (mmhr) | | | | 6.25 | |
| Bisphenol AF[b] (mmhr) | | | | | 6.25 |
| $(n\text{-}C_4H_9)_3(CH_2{=}CHCH_2)P^+Cl^-$ (mmhr) | 3.6 | 3.6 | 3.6 | 3.6 | 3.6 |
| $PbHPO_3$ (phr) | 12 | 12 | 12 | 12 | 12 |
| ASTM N-550 Carbon black (phr) | 30 | 30 | 30 | 30 | 30 |

[a]2,2-isopropylidene-bis(4-hydroxybenzene)
[b]4,4'-$HOC_6H_4C(CF_3)_2C_6H_4OH$

| Rheometer, 177°C: | | | | | |
|---|---|---|---|---|---|
| $M_L$ (N · m) | 0.45 | 0.23 | 0.23 | 0.23 | 0.23 |
| $M_H$ (N · m) | 4.52 | 5.31 | 9.83 | 9.83 | 9.23 |
| Min to $M_H$ | 24 | 24 | 24 | 24 | 24 |
| $t_{sl}$ | 6.2 | 6.0 | 4.7 | 6.0 | 5.5 |
| $t'_c$ (90) | 16.5 | 18.5 | 9.5 | 13.3 | 12.5 |

Example 17

Epichlorohydrin-ethylene oxide (ECO) copolymer was compounded with a polyphenol, a tetraorganophosphonium salt, an acid acceptor, a filler, a heat stabilizer, and a processing aid. The gum stock was mixed, cured, and evaluated as in Example 1. The composition of the curable gum stock and the indicated mechanical properties are set forth in Table IV (as "Example 17") together for purposes of comparison with corresponding data on the same polymer gum using a conventional curing system (as "Comparison Run").

Superior retention of properties was obtained for the elastomeric rubber employing the cure system of the present invention (Example 17).

TABLE IV

| Ingredient | Example 17 | Comparison run |
|---|---|---|
| Polymer gum[a] (parts) | 100 | 100 |
| Bisphenol S (mmhr) | 6.25 | — |
| $(C_6H_5)_3(C_6H_5CH_2)P^+Cl^-$ (mmhr) | 3.6 | — |
| 2-Mercaptoimidazoline (mmhr) | — | 9.8 |
| $PbHPO_3$ (phr) | 12 | 12 |
| ASTM N-550 Carbon black (phr) | 50 | 50 |
| Polymerized 2,2,4-trimethyl-1,2-dihydroquinoline[b] (phr) | 2.5 | 2.5 |
| Polymer processing additive[c] (phr) | 1 | 1 |

[a]"Hydrin 200", commercially available from B. F. Goodrich Chemical Co.
[b]"Agerite Resin D", commercially available from R. T. Vanderbilt Co.
[c]$C_8F_{17}SO_2N(CH_3)CH_2CH_2OH/CaCO_3$, 3/1 by wt.

TABLE IV (contd.)

| | Example 17 | Comparison run |
|---|---|---|
| Press cure, 20 min. 188°C: | | |
| Tensile (MPa) | 12.00 | 12.69 |
| 100% Modulus (MPa) | 4.09 | 4.49 |
| Elongation at break (%) | 343 | 353 |
| Hardness (Shore A-2) | 73 | 75 |
| Post cure, 24 hrs., 149°C: | | |
| Tensile (MPa) | 13.05 | 14.65 |
| 100% Modulus (MPa) | 6.10 | 6.76 |
| Elongation at break (%) | 217 | 207 |
| Hardness (Shore A-2) | 82 | 78 |
| Accelerated aging of post cured sample—tensile (MPa): | | |
| Time at 149°C | | |
| 1 week | 10.44 | 9.42 |
| 3 weeks | 7.88 | 3.28 |
| 5 weeks | 6.86 | 1.71 |
| Accelerated aging of post cured sample—100% modulus (MPa): | | |
| Time at 149°C | | |
| 1 week | 6.04 | 8.16 |
| 3 weeks | 6.25 | — |
| 5 weeks | 6.15 | — |

TABLE IV (contd.)

Accelerated aging of post cured sample—elongation at break (%):

| Time at 149°C | | |
|---|---|---|
| 1 week | 170 | 130 |
| 3 weeks | 150 | 70 |
| 5 weeks | 120 | 30 |

Accelerated aging of post cured sample—hardness (Shore A-2):

| Time at 149°C | Example 17 | Comparison run |
|---|---|---|
| 1 week | 84 | 85 |
| 3 weeks | 87 | 84 |
| 5 weeks | 87 | 77 |

Examples 18 through 20

In a series of three runs, epichlorohydrin homopolymer was compounded with a polyphenol, a tetraorganoammonium salt, an acid acceptor, a filler and optionally with one of two heat stabilizers. The resulting gum stock compositions were mixed, cured, and evaluated as in Example 1. The composition of the curable gum stocks and their indicated mechanical properties are set forth in Table V.

The heat stabilizers (polymerized 2,2,4 - trimethyl - 1,2 - dihydroquinoline and N,N' - di - beta - naphthyl - p - phenylenediamine) were useful in prolonging elastomeric properties.

TABLE V

| Ingredient | Example 18 | Example 19 | Example 20 |
|---|---|---|---|
| Polymer gum (parts) | 100 | 100 | 100 |
| Hydroquinone (mmhr) | 9 | 9 | 9 |
| $(n\text{-}C_4H_9)_4N^+OH^-$ [a] (mmhr) | 1.5 | 1.5 | 1.5 |
| $PbHPO_3$ (phr) | 18 | 18 | 18 |
| ASTM N-990 Carbon black[b] (phr) | 30 | 30 | 30 |
| Polymerized 2,2,4-trimethyl-1,2-dihydroquinoline (phr) | | 2.5 | |
| N,N'-di-beta-naphthyl-p-phenylenediamine[c] (phr) | | | 5.9 |

[a]In 25% $CH_3OH$ solution.
[b]"Thermax MT", commercially available from Thermatomic Carbon Co.
[c]"Agerite White", commercially available from R. T. Vanderbilt Co.

Properties after press cure (10 min. at 177°C) and post cure (24 hrs. at 177°C):

| | 18 | 19 | 20 |
|---|---|---|---|
| Tensile (MPa) | 8.06 | 7.44 | 5.65 |
| Elongation at break (%) | 280 | 200 | 230 |
| Hardness (Shore A-2) | 62 | 78 | 64 |

Accelerated aging of post cured sample, 177°C—tensile (MPa):

| Time | 18 | 19 | 20 |
|---|---|---|---|
| 3 days | 0.55 | 4.24 | 5.37 |
| 7 days | * | 2.55 | 2.17 |
| 14 days | * | 3.72 | 2.07 |

TABLE V (contd.)

Accelerated aging of post cured sample, 177°C—Elongation at break (%):

| Time | | | |
|---|---|---|---|
| 3 days | 300 | 110 | 190 |
| 7 days | * | 100 | 130 |
| 14 days | * | 105 | 100 |

Accelerated aging of post cured sample, 177°C—Hardness (Shore A-2):

| Time | | | |
|---|---|---|---|
| 3 days | 52 | 70 | 68 |
| 7 days | 54 | 75 | 66 |
| 14 days | * | 77 | 67 |

*too weak to test.

Examples 21 through 24

In a series of 4 runs, epichlorohydrin homopolymer was compounded with a polyphenol, a tetraorganophosphonium salt, two different acid acceptors (at two different concentrations), a filler, and two conventional heat stabilizers. The curable gum stocks were mixed, cured and evaluated as in Example 1. The composition of each gum stock and the indicated mechanical properties are set forth in Table VI.

The acid acceptor white lead was more effective than the acid acceptor red lead. Higher levels gave more rapid cures.

TABLE VI

| Ingredient | Example 21 | Example 22 | Example 23 | Example 24 |
|---|---|---|---|---|
| Polymer gum (parts) | 100 | 100 | 100 | 100 |
| Bisphenol S (mmhr) | 6.25 | 6.25 | 6.25 | 6.25 |
| $(C_6H_5)_3(C_6H_5CH_2)P^+Cl^-$ (mmhr) | 3.6 | 3.6 | 3.6 | 3.6 |
| PbO (phr) | 5 | 10 | — | — |
| $Pb_3O_4$ (phr) | — | — | 5 | 10 |
| ASTM N-550 Carbon black (phr) | 40 | 40 | 40 | 40 |
| Nickel dibutyldithiocarbamate (phr) | 1 | 1 | 1 | 1 |
| Nickel dimethyldithiocarbamate (phr) | 1 | 1 | 1 | 1 |
| Rheometer, 177°C: | | | | |
| $M_L$ (N · m) | .11 | .23 | .23 | .11 |
| $M_H$ (N · m) | 10.85 | 11.07 | 8.81 | 11.3 |
| Min to $M_H$ | 36 | 24 | 36 | 31 |
| $t_{sl}$ | 5.0 | 4.5 | 8.7 | 7.3 |
| $t'_c$ (90) | 22.2 | 13.8 | 30.5 | 26.7 |

Example 25

In a series of four runs, fluoropolymer gum and epichlorohydrin homopolymer gum were combined with a polyphenol, a tetraorganophosphonium salt, an acid acceptor, a filler, and a heat stabilizer. The ingredients were milled by putting the gum stock on the mill, adding the curing and cocuring agents as a group, adding all other ingredients as a group, and cutting the mixture back and forth until all ingredients were well dispersed. The curable gum stock was then molded and cured as indicated. The mechanical

properties of the cured elastomers were determined before and after accelerated aging. Low temperature retraction, volume swell, and compression set data were also obtained. The composition of the curable gum stocks and the above mentioned mechanical properties are set forth in Table VII. Comparative data are shown for the unblended gums (Runs 1 and 6).

TABLE VII

| | Run No. | | | | | |
|---|---|---|---|---|---|---|
| Ingredient | 1 | 2 | 3 | 4 | 5 | 6 |
| Fluoropolymer gum[a] (parts) | 100 | 76 | 55 | 44 | 29 | |
| Polyepichlorohydrin gum[b] (parts) | | 24 | 45 | 56 | 71 | 100 |
| Bisphenol AF (mmhr) | 6.25 | 6 | 6 | 6 | 6 | 6 |
| $(C_6H_5)_3(C_6H_5CH_2)P^+Cl^-$ (mmhr) | 1.3 | 1.6 | 1.9 | 2 | 2.2 | 2.6 |
| MgO[c] (phr) | 3 | | | | | |
| $Ca(OH)_2$ (phr) | 6 | | | | | |
| Dibasic lead phthalate (phr) | | 6.2 | 12 | 15 | 15 | |
| Tribasic lead maleate monohydrate[d] (phr) | | | | | | 18 |
| ASTM N-990 carbon black (phar) | 30 | 30 | 30 | 30 | 30 | 30 |
| N,N'-di-beta-naphthyl-p-phenylenediamine (phr) | | 0.7 | 1.3 | 1.6 | 2.1 | |
| Polymerized 2,2,4-trimethyl-1,2-dihydroquinoline (phr) | | | | | | 2.5 |

[a]An 80/20 mol % copolymer of $CF_2=CH_2$ and $CF_3CF=CF_2$.
[b]"Hydrin 100", epichlorohydrin homopolymer, commercially available from B. F. Goodrich Chemical Co.
[c]"Maglite D", commercially available from C. P. Hall Co.
[d]"Trimal", commercially available from National Lead Co.

TABLE VII (contd.)

Properties after press cure (10 min. at 177°C unless indicated otherwise) and post cure (24 hrs. at 177°C unless indicated otherwise):

| | Run No. | | | | | |
|---|---|---|---|---|---|---|
| | 1 | 2 | 3 | 4 | 5 | 6 |
| Tensile (MPa) | 13.44[a] | 7.31 | 6.48 | 7.00 | 8.10[b] | 12.76 |
| 100% Modulus (MPa) | 6.20[a] | 3.93 | 4.93 | 4.41 | 3.41[b] | 2.62 |
| Elongation at break (%) | 195[a] | 270 | 140 | 180 | 280[b] | 190 |
| hardness (Shore A-2) | 75[a] | 76 | 77 | 76 | 72[b] | 67 |
| Accelerated aging of post cured sample—tensile (MPa): | | | | | | |
| Time at 177°C | | | | | | |
| 3 days | 10.69[c] | 8.89 | 6.48 | 8.31 | 6.93 | 5.07 |
| 7 days | * | 7.83 | 5.96 | 7.52 | 4.17 | 4.79 |
| 14 days | * | 6.27 | 4.93 | 5.69 | 3.14 | 2.93 |

[a]Post cured for 24 hrs. at 260°C.
[b]Press cured for 20 min. at 177°C.
[c]Aged at 276°C. (Essentially no change in properties when aged at 177°C).
*Not run.

TABLE VII (contd.)

Accelerated aging of post cured sample—elongation at break (%):

| | | | | | | |
|---|---|---|---|---|---|---|
| Time at 177°C | | | | | | |
| 3 days | 190[c] | 200 | 125 | 145 | 200 | * |
| 7 days | * | 210 | 125 | 145 | 100 | 90 |
| 14 days | * | 160 | 110 | 115 | 100 | 90 |

Accelerated aging of post cured sample—hardness (Shore A-2):

| | | | | | | |
|---|---|---|---|---|---|---|
| Time at 177°C | | | | | | |
| 3 days | 77[c] | 79 | 80 | 80 | 76 | 72 |
| 7 days | * | 80 | 81 | 81 | 74 | 77 |
| 14 days | * | 80 | 82 | 82 | 75 | 74 |

Low temperature retraction—$TR_{10}$ (°C):

| | | | | | | |
|---|---|---|---|---|---|---|
| | −17 | * | * | −17 | −18 | −21 |

Volume swell, 70 hr. immersion (%):

| | | | | | | |
|---|---|---|---|---|---|---|
| ASTM #3 oil at 175°C | 3 | 2 | 4 | 10 | 17 | 19 |
| Reference fuel C at 25°C | 2 | 17 | 24 | 27 | 35 | 45 |

Compression set, O-rings. 70 hrs. at 150°C (%):

| | | | | | | |
|---|---|---|---|---|---|---|
| | 10 | 21 | 20 | 36 | 37 | 42 |

[c]Aged at 276°C. (Essentially no change in properties when aged at 177°C).
*Not run.

Example 26

In this example fluoropolymer gum and epichlorohydrin/ethylene oxide copolymer gum were combined with a polyphenol, a tetraorganophosphonium salt, a basic lead compound, a filler, and two heat stabilizers. The curable gum stocks were compounded, milled and evaluated as in Example 25. The compositions of the curable gum stocks and mechanical properties are set forth in Table VIII. Comparative data are shown for the unblended gums (Runs 7 and 10).

TABLE VIII

| Ingredient | Run No. 7 | 8 | 9 | 10 |
|---|---|---|---|---|
| Fluoropolymer gum[a] (parts) | 100 | 44 | 44 | |
| Polyepichlorohydrin gum[b] (parts) | | 56 | 56 | 100 |
| Bisphenol AF (mmhr) | 6.25 | 6 | 6 | 6 |
| $(C_6H_5)_3(C_6H_5CH_2)P^+Cl^-$ (mmhr) | 1.3 | 2 | 2 | 2.6 |
| MgO (phr) | 3 | | | |
| $Ca(OH)_2$ (phr) | 6 | | | |
| $PbHPO_3$ (phr) | | | | 18 |
| Dibasic lead phthalate (phr) | | 15 | | |
| Tribasic lead fumarate[c] (phr) | | | 12 | |
| ASTM N-990 carbon black (phr) | 30 | | | 30 |
| Polymerized 2,2,4-trimethyl-1,2-dihydroquinoline (phr) | | | | 2.5 |
| N,N'-di-beta-naphthyl-p-phenylenediamine (phr) | | 2.5 | 2.5 | |
| Octadecyl amine[d] | | 1.65 | 1.65 | |

[a]An 80/20 mol % copolymer of $CF_2=CH_2$ and $CF_3CF=CF_2$.
[b]"Hydrin 200", a 50/50 mol % copolymer of epichlorohydrin and ethylene oxide, commercially available from B. F. Goodrich Chemical Co.
[c]"Lectro 78", commercially available from National Lead Co.
[d]"Armeen 18D", commercially available from Armour Chemical Co.

TABLE VIII (contd.)

Properties after press cure (20 min. at 177°C unless indicated otherwise) and post cure (24 hrs. at 177°C unless indicated otherwise):

| | Run No. 7 | 8 | 9 | 10 |
|---|---|---|---|---|
| Tensile (MPa) | 13.44[a] | 5.17 | 2.76 | 3.08 |
| 100% Modulus (MPa) | 6.20[a] | 2.34 | 1.10 | 0.63 |
| Elongation at break (%) | 195[a] | 190 | 300 | 370 |
| Hardness (Shore A-2) | 75[a] | 67 | 58 | 33 |
| Accelerated aging of post cured sample—tensile (MPa): | | | | |
| Time at 177°C | | | | |
| 3 days | 10.69[a,b] | 3.90 | 1.38 | 1.83 |
| 7 days | * | 2.65 | 0.97 | * |
| 14 days | * | 2.65 | 1.62 | * |

TABLE VIII (contd.)

| | | | | |
|---|---|---|---|---|
| Accelerated aging of post cured sample—elongation at break (%): | | | | |
| Time at 177°C | | | | |
| 3 days | 190[a,b] | 110 | 180 | 187 |
| 7 days | * | 80 | 100 | * |
| 14 days | * | 60 | 90 | * |
| Accelerated aging of post cured sample—hardness (Shore A-2): | | | | |
| Time at 177°C | | | | |
| 3 days | 77[a,b] | 72 | 59 | 32 |
| 7 days | * | 72 | 60 | 19 |
| 14 days | * | 81 | 65 | * |

[a]Press cured for 10 min at 177°C and post cured for 24 hrs. at 260°C.
[b]Aged at 276°C. (Essentially no change in properties when aged at 177°C).
*Not run.

Example 27

In a series of five runs, fluoropolymer gum, epichlorohydrin homopolymer gum, and epichlorohydrin/ethylene oxide copolymer gum were combined with a polyphenol, a tetraorganophosphonium salt, a basic lead compound, a filler, and two heat stabilizers. The curable gum stocks were compounded, milled and evaluated as in Example 25. The compositions of the curable gum stock and mechanical properties are set forth below in Table IX.

TABLE IX

| | Run No. | | | | |
|---|---|---|---|---|---|
| | 11 | 12 | 13 | 14 | 15 |
| Fluoropolymer gum[a] (parts) | 28 | 28 | 28 | 44 | 44 |
| Polyepichlorohydrin gum[b] (parts) | 36 | 36 | 36 | 20 | 20 |
| Polyepichlorohydrin gum[c] (parts) | 36 | 36 | 36 | 36 | 36 |
| Bisphenol AF (mmhr) | 6 | 6 | 6 | 6 | 6 |
| $(C_6H_5)_3(CH_2{=}CHCH_2)P^+Cl^-$ (mmhr) | 2 | 2 | 2 | 2.2 | 2.2 |
| Dibasic lead phthalate (phr) | 15 | | | 15 | |
| PbO (phr) | | 24 | | | |
| Tribasic lead fumarate (phr) | | | 24 | | |
| Tribasic lead maleate monohydrate (phr) | | | | | 12 |
| ASTM N-990 carbon black (phr) | 30 | 30 | 30 | 30 | 30 |
| N,N'-di-beta-naphthyl-p-phenylenediamine (phr) | 2.5 | 2.5 | 2.5 | 2.2 | 2.2 |
| Octadecyl amine (phr) | 0.7 | 0.7 | 0.72 | 0.55 | 0.55 |

[a]An 80/20 mol % copolymer of $CF_2{=}CH_2$ and $CF_3CF{=}CF_2$.
[b]"Hydrin 100", epichlorohydrin homopolymer, commercially available from B. F. Goodrich Chemical Co.
[c]"Hydrin 200", a 50/50 mol % copolymer of epichlorohydrin and ethylene oxide, commercially available from B. F. Goodrich Chemical Co.

TABLE IX (contd.)
Properties after press cure (20 min at 177°C) and post cure (24 hrs at 177°C):

| | Run No. | | | | |
|---|---|---|---|---|---|
| | 11 | 12 | 13 | 14 | 15 |
| Tensile (MPa) | 6.17 | 3.79 | 3.52 | 6.55 | 3.48 |
| 100% Modulus (MPa) | 1.90 | 1.34 | 1.34 | 2.86 | 1.34 |
| Elongation at break (%) | 290 | 390 | 350 | 240 | 320 |
| Hardness (Shore A-2) | 66 | 60 | 60 | 69 | 62 |
| Accelerated aging of post cured sample—tensile (MPa): | | | | | |
| Time at 177°C | | | | | |
| 3 days | 5.38 | 3.52 | 3.24 | 5.24 | 2.96 |
| 7 days | 3.24 | 2.72 | 2.72 | 3.65 | 2.41 |
| 14 days | 2.69 | 2.17 | 2.41 | 3.14 | 2.17 |
| Accelerated aging of post cured sample—elongation at break (%): | | | | | |
| Time at 177°C | | | | | |
| 3 days | 140 | 200 | 140 | 150 | 300 |
| 7 days | 100 | 100 | 100 | 115 | 160 |
| 14 days | 60 | 80 | 60 | 100 | 100 |
| Accelerated aging of post cured sample—hardness (Shore A-2): | | | | | |
| Time at 177°C | | | | | |
| 3 days | 74 | 66 | 67 | 74 | 66 |
| 7 days | 74 | 70 | 73 | 73 | 66 |
| 14 days | 79 | 73 | 77 | 75 | 71 |

Example 28

A laminated article was prepared by preparing two curable gum stocks (one containing a blend of a fluoropolymer gum and epichlorohydrin copolymer gum, and the other containing epichlorohydrin copolymer gum), extruding the two curable gum stocks into 0.5 cm sheets or layers, I and II, and pressing the sheets against one another in a heated platen press under a pressure of 8 MPa at 160°C for 30 minutes. The excellent bond strength of the laminated article was demonstrated by pulling the two elastomer layers apart according to a T-peel test as described in ASTM D-1876, on an Instron tensile tester at 23°C. At a crosshead separation rate of 5 cm/minute the T-peel test value was 6.96 Kg per lineal cm, with failure taking place mainly within the elastomeric layers rather than at the bond surface between them. The compositions of the curable gum stocks used to form the two layers are set forth below in Table X.

TABLE X

| Ingredient | Layer I | Layer II |
|---|---|---|
| Fluoropolymer gum[a] (parts) | 75 | |
| Polyepichlorohydrin gum[b] (parts) | 25 | 100 |
| Bisphenol S (mmhr) | 6 | 6 |
| $(C_6H_5)_3(C_6H_5CH_2)P^+Cl^-$ (mmhr) | 2.6 | 2.6 |
| $PbHPO_3$ (phr) | 4.5 | 18 |
| $Ca(OH)_2$ (phr) | 4.5 | |
| MgO (phr) | 2.25 | |
| ASTM N-990 carbon black (phr) | 30 | 30 |
| Nickel dibutyldithiocarbamate (phr) | 1 | 1 |
| Nickel dimethyldithiocarbamate (phr) | 1 | 1 |
| $C_8F_{17}SO_2N(C_2H_5)C_2H_4O(C_2H_4O)_2H$[c] (phr) | | 1 |

[a]An 80/20 mol % copolymer of $CF_2{=}CH_2$ and $CF_3CF{=}CF_2$.

[b]"Hydrin 200", a 50/50 mol % copolymer of epichlorohydrin and ethylene oxide, commercially available from B. F. Goodrich Chemical Co.

[c]A processing aid.

Example 29

A laminated article was prepared from two sheets of curable gum stock, as described in Example 28, one sheet being curable fluoropolymer gum stock (layer I) and the other sheet being curable epichlorohydrin copolymer gum stock (layer II). The bond strength of the resulting laminate was 4.3 kg per linear cm as measured in the T-peel test described in Example 28. The compositions of the two layers are set forth in Table XI.

In a comparative experiment, a sheet of curable fluoropolymer gum stock (layer I) and a sheet of conventional curable epichlorohydrin gum stock (layer III) were pressed together in a heated platen press under a pressure of 8 MPa at 177°C for 30 minutes. The resulting article had a very weak sheet-to-sheet bond whose strength was not measurable on the Instron tensile tester.

TABLE XI

| Ingredient | Layer I | Layer II | Layer III |
|---|---|---|---|
| Fluoropolymer gum[a] (parts) | 100 | | |
| Epichlorohydrin copolymer gum[b] (parts) | | 100 | 100 |
| Bisphenol S (mmhr) | | 6.4 | |
| Bisphenol AF (mmhr) | 4.2 | | |
| $(C_6H_5)_3(C_6H_5CH_2)P^+Cl^-$ (mmhr) | 1.8 | 5.0 | |
| 2-Mercaptoimidazoline (mmhr) | | | 9.8 |
| $PbHPO_3$ (phr) | | 12 | 12 |
| MgO (phr) | 9 | | |
| ASTM N-990 carbon black (phr) | 15 | | |
| ASTM N-762 carbon black[c] (phr) | 7 | | |
| ASTM N-326 carbon black[d] (phr) | 5 | | |
| ASTM N-550 carbon black (phr) | | 50 | 50 |
| Polymerized 2,2,4-trimethyl-1,2-dihydroquinoline (phr) | | | 2.5 |
| Nickel dibutyldithiocarbamate (phr) | | 1 | |
| Nickel dimethyldithiocarbamate (phr) | | 1 | |
| $C_8F_{17}SO_2N(C_2H_5)C_2H_4O(C_2H_4O)_2H$ (phr) | | 1 | 1 |
| Polyethylene wax[3] (phr) | 1 | | |
| Carnauba wax (phr) | 0.5 | | |
| 4,4'-Dichlorodiphenylsulfone[f] | 1 | | |

[a]An 80/20 mol % copolymer of $CF_2=CH_2$ and $CF_3CF=CF_2$.
[b]"Hydrin 200", a 50/50 mol % copolymer of epichlorohydrin and ethylene oxide, commercially available from B. F. Goodrich Chemical Co.
[c]"Continex N-762", commercially available from Continental Carbon Co.
[d]"Continex N-326", commercially available from Continental Carbon Co.
[e]"AC-Polyethylene 6A" processing aid, commercially available from Allied Chemical Co.
[f]A processing aid.

## Claims

1. A curable gum stock composition comprising polyepichlorohydrin gum, polyphenol curing agent, and acid acceptor, characterized in that said composition contains:

(a) organoammonium, organoarsonium, or organophosphonium cocuring agent of the formula:

$$\text{(i)}\ (R^1)_4Q^{+1}(X^{-m})_{1/m}\ \text{or}$$

$$\text{(ii)}\ (R^1)_3QR^2Q(R^1)_3{}^{+2}(X^{-m})_{2/m}$$

wherein Q is a nitrogen, arsenic or phosphorus atom; X is an anion of valence m; each $R^1$ is a monovalent organic radical containing 1 to 20 carbon atoms, is the same as or different from any other $R^1$, and can combine with another $R^1$ to form a cyclic structure containing a Q atom; and $R^2$ is a divalent organic radical containing 2 to 12 carbon atoms; or

(b) organosulfonium cocuring agent of the formula:

(i) $(R^3)_3S^{+1}(X^{-m})_{1/m}$ or

(ii) $(R^3)_2SR^4S(R^3)_2{}^{+2}(X^{-m})_{2/m}$

wherein S is sulfur; X is an anion of valence m; each $R^3$ is a monovalent organic radical containing 1 to 20 carbon atoms, is the same as or different from any other $R^3$, and can combine with another $R^3$ to form a cyclic structure containing an S atom; $R^4$ is a divalent organic radical containing 2 to 12 carbon atoms; and at least one $R^3$ or $R^4$ group is aromatic.

2. A composition according to Claim 1, further characterized in that said curing agent is selected from the class consisting of:

(i) polyhydroxy benzenes, naphthalenes, anthracenes, chromones, xanthones, and anthraquinones; and

(ii) polyphenols of the formula

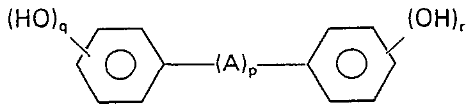

wherein p is 0 or 1; the sum (q+r) is 2 or more; and A is a thio, oxy, sulfinyl, sulfonyl or carbonyl radical or a divalent organic radical containing 1 to 13 carbon atoms.

3. A composition according to Claim 2, further characterized in that said curing agent comprises Bisphenol S or AF and said cocuring agent comprises tetraorganophosphonium salt.

4. A composition according to Claim 3, further characterized in that said composition contains, per 100 grams of the total weight of said polyepichlorohydrin gum, from 0.3 to 15 millimoles of said curing agent, from 0.2 to 7.5 millimoles of said cocuring agent, from 0.5 to 40 grams of acid acceptor selected from the group consisting of lead-based compounds, calcium hydroxide, and magnesium oxide, and from 0.1 to 20 grams of organic primary monoamine and/or polysecondary amine as heat stabilizer.

5. The composition of Claim 4 which is cured into an article having one or more layers of cured elastomer.

6. A composition according to Claim 1, further characterized in that said composition contains fluoropolymer gum comprising a copolymer of (1) terminally ethylenically unsaturated olefin which has 2 to 4 carbon atoms and can be homopolymerized by emulsion polymerization in the presence of a water soluble free radical catalyst such as $K_2S_2O_8$, and (2) at least one terminally unsaturated fluoromonoolefin, each of the doubly bonded chain carbon atoms of said fluoromonoolefin being bonded to at least one fluorine atom substituent and any remaining valence of any chain carbon atom of said fluoromonoolefin being satisfied by hydrogen, fluorine, chlorine, bromine, or a fluoroalky or fluoroalkoxy radical of 1 to 4 carbon atoms, with at least 10 percent of the chain carbon atoms of said copolymer being $—CH_2—$ units, at least 10 percent of the chain carbon atoms of said copolymer being bonded to alkyl or alkoxy radicals with the proviso that only one such radical is bonded to a given carbon atom, and with at least 50 percent of the total number of carbon-bonded moieties in said copolymer being fluorine, but with no chain carbon atom of said copolymer being bonded to more than one chlorine or bromine atom.

7. A composition according to Claims 4 or 6, characterized in that said polyepichlorohydrin gum is a homopolymer of epichlorohydrin or copolymer of epichlorohydrin and ethylene oxide, and said fluoropolymer gum comprises a copolymer of vinylidene fluoride and hexafluoropropene.

8. A method for preparing a shaped article from a composition according to Claim 6, characterized in that:

(a) said fluoropolymer gum, said polyepichlorohydrin gum, said polyphenol curing agent, and said organo-onium cocuring agent are blended with acid acceptor to form a curable gum stock;

(b) said curable gum stock is shaped; and

(c) said shaped gum stock is subjected to sufficient heat and pressure to form a vulcanized elastomeric article.

9. A masterbatch composition for making the gum stock composition of Claim 1, characterized in that said masterbatch comprises:

(a) polyepichlorohydrin gum; and

(b) polyphenol curing agent;

said masterbatch containing 100 to 900 parts of said curing agent per 100 parts of said gum.

10. A masterbatch composition for making the gum stock composition of Claim 1, characterized in that said masterbatch comprises:

(a) polyepichlorohydrin gum; and

(b) organo-onium cocuring agent selected from compounds of the formulas

(i) $(R^1)_4Q^{+1}(X^{-m})_{1/m}$ or

(ii) $(R^1)_3QR^2Q(R^1)_3{}^{+2}(X^{-m})_{2/m}$

wherein Q is a nitrogen, arsenic or phosphorus atom; X is an anion of valence m; each $R^1$ is a monovalent organic radical containing 1 to 20 carbon atoms, is the same as or different from any other $R^1$, and can combine with another $R^1$ to form a cyclic structure containing a Q atom; and $R^2$ is a divalent organic radical containing 2 to 12 carbon atoms;

(iii) $(R^3)_3S^{+1}(X^{-m})_{1/m}$ or

(iv) $(R^3)_2SR^4S(R^3)_2{}^{+2}(X^{-m})_{2/m}$

wherein S is sulfur; X is an anion of valence m; each $R^3$ is a monovalent organic radical containing 1 to 20 carbon atoms, is the same as or different from any other $R^3$, and can combine with another $R^3$ to form a cyclic structure containing an S atom; $R^4$ is a divalent organic radical containing 2 to 12 carbon atoms; and at least one $R^3$ or $R^4$ group is aromatic;
said masterbatch containing 100 to 900 parts of said cocuring agent per 100 parts of said gum.

**Patentansprüche**

1. Härtbare Harzmasse, die ein Polyepichlorhydrinharz, Polyphenol als Härter und einen Säureakzeptor enthält, dadurch gekennzeichnet, daß die Masse enthält:

(a) Als Härtebeschleuniger ein Organoammonium, Organoarsonium oder Organophosphonium der Formel

(i) $(R^1)_4Q^{+1}(X^{-m})_{1/m}$ oder

(ii) $(R^1)_3QR^2Q(R^1)_3{}^{+2}(X^{-m})_{2/m}$

in der Q ein Stickstoff-, Arsen- oder Phosphoratom ist, X ein Anion mit der Wertigkeit m, jedes $R^1$ ein einwertiges organisches Radikal mit 1 bis 20 Kohlenstoffatomen ist und jedem anderen $R^1$ gleich oder von ihm verschieden ist und mit einem anderen $R^1$ zu einer zyklischen Struktur verbindbar ist, und $R^2$ ein zweiwertiges organisches Radikal mit 2 bis 12 Kohlenstoffatomen ist; oder

(b) als Härtebesch leuniger ein Organosulfonium der Formel

(i) $(R^3)_3S^{+1}(X^{-m})_{1/m}$ oder

(ii) $(R^3)_2SR^4S(R^3)_2{}^{-2}(X^{-m})_{2/m}$

in der S Schwefel ist, X ein Anion mit der Wertigkeit m, jedes $R^3$ ein einwertiges organisches Radikal mit 1 bis 20 Kohlenstoffatomen ist und jedem anderen $R^3$ gleich oder von ihm verschieden ist und mit einem anderen $R^3$ zu einer zyklischen Struktur verbindbar ist, die ein Schwefelatom enthält, $R^4$ ein zweiwertiges organisches Radikal mit 2 bis 12 Kohlenstoffatomen ist und mindestens eine der Gruppen $R^3$ und $R^4$ aromatisch ist.

2. Masse nach Anspruch 1, dadurch gekennzeichnet, daß der Härter aus der Klasse ausgewählt ist, die besteht aus

(i) den Polyhydroxybenzolem, Naphthalinen, Anthracenen, Chromonen, Xanthonen und Anthrachinonen und

(ii) den Polyphenolen der Formel

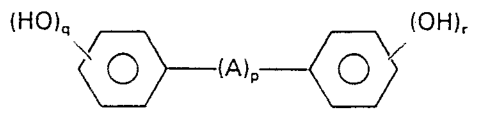

in der p gleich 0 oder 1, die Summe (q+r) gleich 2 oder höher ist und A ein Thio-, Oxy-, Sulfinyl-, Sulfonyl- oder Carbonylradikal ist oder ein zweiwertiges organisches Radikal mit 1 bis 13 Kohlenstoffatomen.

3. Masse nach Anspruch 2, dadurch gekennzeichnet, daß der Härter wenigstens teilweise aus Bisphenol S oder AF und der Härtebeschleuniger wenigstens teilweise aus einem Tetraorganophosphoniumsalz besteht.

4. Masse nach Anspruch 3, dadurch gekennzeichnet, daß die Masse pro 100 g des Gesamtgewichts des Polyepichlorhydrinharzes 0,3 bis 15 Millimol des Härters und 0,2 bis 7,5 Millimol des Härtebeschleunigers enthält, ferner 0,5 bis 40 g des Säureakzeptors, der aus der Gruppe ausgewählt ist, die aus den Bleiverbindungen, dem Calciumhydroxid und dem Magnesiumoxid besteht, und als Wärmestabilisiermittel 0,1 bis 20 g primäres Monoamin und/oder Polysekundäramin.

5. Masse nach Anspruch 4, die zur Bildung eines Gegenstandes gehärtet wird, der eine oder mehrere Schichten aus gehärtetem Elastomer besitzt.

6. Masse nach Anspruch 1, dadurch gekennzeichnet, daß die Masse Fluorpolymerharz enthält, das ein

Copolymer aus (1) einem Olefin enthält, des endständig ethylenisch ungesättigt ist und das 2 bis 4 Kohlenstoffatome enthält und in Anwesenheit eines wasserlöslichen, freie Radikale freisetzenden Katalysators, wie $K_2S_2O_8$ durch Emulsionspolymerisation homopolymerisierbar ist, und (2) mindestens ein entständig ungesättigtes Fluormonoolefin, wobei jedes der mit einer Doppelbindung gebundenen Kettenkohlenstoffatome des Fluormonoolefins mit mindestens einem aus einem Fluoratom bestehenden Substituenten verbunden ist und eine etwa noch vorhandene Wertigkeit eines Kettenkohlenstoffatoms der Fluormonoolefins mit Wasserstoff, Fluor, Chlor, Brom oder einem Fluoralkyl- oder Fluoralkoxyradikal mit 1 bis 4 Kohlenstoffatomen abgesättigt ist, oder ein Fluoralkyl- oder Fluoralkoxyradikal mit 1 bis 4 Kohlenstoffatomen, wobei mindestens 10% der Kettenkohlenstoffatome des genannten Copolymers zu —$CH_2$-Einheiten gehören, mindestens 10% der Kettenkohlenstoffatome des genannten Copolymers mit Alkyl- oder Alkoxyradikalen verbunden sind, von denen mit einem gegebenen Kohlenstoffatom nur ein derartiges Radikal verbunden ist, mindestens 50% der Gesamtzahl der mit Kohlenstoff verbundenen Anteile des Copolymerisats Fluor sind, und kein Kettenkohlenstoffatome des genannten Copolymers mit mehr als einem Chlor- oder Bromatom verbunden ist.

7. Masse nach Anspruch 4 oder 6, dadurch gekennzeichnet, daß das Polyepichlorhydrinharz ein Homopolymer des Epichlorhydrins oder ein Copolymer von Epichlorhydrin und Ethylenoxid ist und daß das Fluorpolymerharz wenigstens teilweise aus einem Copolymer des Vinyldenfluorids und des Hexafluorpropens besteht.

8. Verfahren zum Herstellen eines Formkörpers aus einer Masse nach Anspruch 6, dadurch gekennzeichnet, daß

(a) das Fluorpolymerharz, des Polyepichlorhydrinharz, der aus Polyphenol bestehende Härter und der aus Organo-Onium bestehende Härtebeschleuniger mit dem Säureakzeptor zu einer härtbaren Harzmasse vermischt werden,

(b) die härtbare Harzmasse geformt wird und

(c) die geformte Harzmasse einer solchen Einwirkung von Wärme und Druck unterworfen wird, daß ein vulkanisierter elastomerer Gegenstand gebildet wird.

9. Masterbatch zum Herstellen der Harzmasse nach Anspruch 1, dadurch gekennzeichnet, daß d das Masterbatch enthält:

(a) Polyepichlorhydrinharz und

(b) als Härter Polyphenol,

wobei das Masterbatch pro 100 Teile des Harzes 100 bis 900 Teile des Härters enthält.

10. Masterbatch zum Herstellen der Harzmasse nach Anspruch 1, dadurch gekennzeichnet, daß das Masterbatch enthält:

(a) Polyepichlorhydrinharz und

(b) als Härtebeschleuniger ein Organo-Onium, des aus den Verbindungen mit folgenden Formeln ausgewählt ist:

(i) $(R^1)_4Q^{+1}(X^{-m})_{1/m}$ oder

(ii) $(R^1)_3QR^2Q(R^1)_3{}^{+2}(X^{-m})_{2/m}$

in der Q ein Stickstoff-, Arsen- oder Phosphoratom ist, X ein Anion mit der Wertigkeit m, jedes $R^1$ ein einwertiges organisches Radikal mit 1 bis 20 Kohlenstoffatomen ist und jedem anderen $R^1$ gleich oder von ihm verschieden ist und mit einem anderen $R^1$ zu einer zyklischen Struktur verbindbar ist, und $R^2$ ein zweiwertiges organisches Radikal mit 2 bis 12 Kohlenstoffatomen ist;

(iii) $(R^3)_3S^{+1}(X^{-m})_{1/m}$ oder

(iv) $(R^3)_2SR^4S(R^3)_2{}^{+2}(X^{-m})_{2/m}$

wobei S Schwefel ist, X ein Anion mit der Wertigkeit m, jedes $R^3$ ein einwertiges organisches Radikal mit 1 bis 20 Kohlenstoffatomen ist und jedem anderen $R^3$ gleich oder von ihm verschieden ist und mit einem anderen $R^3$ zu einer zyklischen Struktur verbindbar ist, die ein Schwefelatom enthält, $R^4$ ein zweiwertiges organisches Radikal mit 2 bis 12 Kohlenstoffatomen ist und mindestens eine der Gruppen $R^3$ und $R^4$ aromatisch ist, und wobei das Masterbatch pro 100 Teile des Gummiharzes 100 bis 900 Teile des Härtebeschleunigers enthält.

**Revendications**

1. Composition de matière première caoutchouteuse durcissable comprenant un caoutchouc de polyépichlorhydrine, un agent de durcissement de type polyphénol et un accepteur d'acide, ladite composition étant caractérisée en ce qu'elle contient:

(a) un agent de codurcissement organo-ammonium, organo-arsonium ou organophosphonium de formule:

(i) $(R^1)_4Q^{+1}(X^{-m})_{1/m}$ ou

(ii) $(R^1)_3QR^2Q(R^1)_3{}^{+2}(X^{-m})_{2/m}$

où Q est un atome d'azote, d'arsénic ou de phosphore, X est anion de valence m; chaque $R^1$ est un radical organique monovalent contenant de 1 à 20 atomes de carbone, est identique ou différent de tout autre $R^1$ et peut se combiner avec un autre $R^1$ pour former une structure cyclique contenant un atome Q; et $R^2$ est un radical organique divalent contenant de 2 à 12 atomes de carbone; ou

(b) un agent de codurcissement organosulfonium de formule:

(i) $(R^3)_3S^{+1}(X^{-m})_{1/m}$ ou

(ii) $(R^3)_2SR^4S(R^3)_2{}^{+2}(X^{-m})_{2/m}$

où S est le soufre, X est un anion de valence m; chaque $R^3$ est un radical organique monovalent contenant de 1 à 20 atomes de carbone, est identique ou différent de tout autre $R^3$, et peut se combiner avec un autre $R^3$ pour former une structure cyclique contenant un atome de soufre; $R^4$ est un radical organique divalent contenant de 2 à 12 atomes de carbone; et au moins un groupe $R^3$ ou $R^4$ est aromatique.

2. Composition selon la revendication 1, caractérisée de plus en ce que ledit agent de durcissement est choisi dans l'ensemble constitué par:

(i) les polyhydroxy-benzènes, -naphtalènes, -anthracènes, -chromones, -xanthones et -anthraquinones; et

(ii) les polyphénols de formule

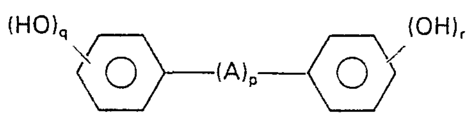

dans laquelle p est 0 ou 1; la somme (q+r) est 2 ou plus; et A est un radical thio, oxy, sulfinyle, sulfonyle ou carbonyle ou un radical organique divalent contenant de 1 à 13 atomes de carbone.

3. Composition selon la revendication 2, caractérisée de plus en ce que ledit agent de durcissement comprend le Bisphénol S ou AF et ledit agent de codurcissement comprend un sel de tétraorganophosphonium.

4. Composition selon la revendication 3, caractérisée de plus en ce que ladite composition contient, pour 100 grammes du poids total dudit caoutchouc de polyépichlorhydrine, de 0,3 à 15 millimoles dudit agent de durcissement, de 0,2 à 7,5 millimoles dudit agent de codurcissement, de 0,5 à 40 g d'un accepteur d'acide choisi parmi l'ensemble constitué par les composés à base de plomb, l'hydroxyde de calcium et l'oxyde de magnésium et de 0,1 à 20 g d'une monoamine organique primaire et/ou d'une amine organique polysecondaire comme stabilisant thermique.

5. Composition de la revendication 4, caractérisée en ce qu'elle est durcie en un article ayant une ou plusieurs couches d'élastomère durci.

6. Composition selon la revendication 1, caractérisée de plus en ce qu'elle contient en caoutchouc de fluoropolymère comprenant un copolymère de (1) une oléfine à insaturation éthylénique terminale ayant de 2 à 4 atomes de carbone et qui peut être homopolymérisée par polymérisation en émulsion en présence d'un catalyseur radicalaire soluble dans l'eau tel que $K_2S_2O_8$, et (2) au moins une fluoromonooléfine à insaturation terminale, chacun des atomes de carbone caténaire à double liaison de ladite fluoromonooléfine étant fixé à au moins un substituant atome de fluor et toute valence restante de tout atome de carbone caténaire de ladite fluoromonooléfine étant satisfaite par l'hydrogène, le fluor, le chlore, le brome ou un radical fluoroalkyle ou fluoroalcoxy de 1 à 4 atomes de carbone, au moins 10% des atomes de carbone caténaires dudit copolymère étant des motifs $—CH_2—$, au moins 10% des atomes de carbone caténaires dudit copolymère étant fixés à des radicaux alkyle ou alcoxy, sous réserve qu'un seul de ces radicaux soit fixé à un atome de carbone donné, et au moins 50% du nombre total des fragments fixés au carbone dans ledit copolymère étant du fluor, mais sans atome de carbone caténaire dudit copolymère fixé à plus d'un atome de chlore ou de brome.

7. Composition selon la revendication 4 ou 6, caractérisée en ce que ledit caoutchouc de polyépichlorhydrine est un homopolymère d'épichlorhydrine ou un copolymère d'épichlorhydrine et d'oxyde d'éthylène et ledit caoutchouc de fluoropolymère comprend un copolymère de fluorure de vinylidène et d'hexafluoropropène.

8. Procédé pour la préparation d'un article façonné à partir d'une composition selon la revendication 6, caractérisé en ce que:

(a) ledit caoutchouc de fluoropolymère, ledit caoutchouc de polyépichlorhydrine, ledit agent de durcissement polyphénol et ledit agent de codurcissement organo-onium sont mélangés avec un accepteur d'acide pour former une matière première caoutchouteuse durcissable;

(b) ladite matière première caoutchouteuse durcissable est façonnée; et

(c) ladite matière première caoutchouteuse façonnée est soumise à une chaleur et une pression suffisantes pour former un article élastomère vulcanisé.

9. Composition de mélange-mère pour préparer la composition de matière première caoutchouteuse de la revendication 1 caractérisée en ce que ledit mélange-mère comprend:

(a) un caoutchouc de polyépichlorhydrine; et

(b) un agent de durcissement polyphénol;

ledit mélange-mère contenant 100 à 900 parties dudit agent de durcissement pour 100 parties dudit caoutchouc.

10. Composition de mélange-mère pour préparer la composition de matière première caoutchouteuse de la revendication 1, caractérisée en ce que ledit mélange-mère comprend:

(a) un caoutchouc de polyépichlorhydrine; et

(b) un agent de codurcissement organo-onium choisi parmi les composés de formules

$$\text{(i)}\ (R^1)_4Q^{+1}(X^{-m})_{1/m}\ \text{ou}$$

$$\text{(ii)}\ (R^1)_3QR^2Q(R^1)_3{}^{+2}(X^{-m})_{2/m}$$

où Q est un atome d'azote, d'arsénic ou de phosphore; X est un anion de valence m; chaque $R^1$ est un radical organique monovalent contenant 1 à 20 atomes de carbone, est identique ou différent de tout autre $R^1$ et peut se combiner avec un autre $R^1$ pour former une structure cyclique contenant un atome Q; et $R^2$ est un radical organique divalent contenant 2 à 12 atomes de carbone;

$$\text{(iii)}\ (R^3)_3S^{+1}(X^{-m})_{1/m}\ \text{ou}$$

$$\text{(iv)}\ (R^3)_2SR^4S(R^3)_2{}^{+2}(X^{-m})_{2/m}$$

où S est le soufre; X est un anion de valence m; chaque $R^3$ est un radical organique monovalent contenant de 1 à 20 atomes de carbone, est identique ou différent de tout autre $R^3$ et peut se combiner avec un autre $R^3$ pour former une structure cyclique contenant un atome de soufre; $R^4$ est un radical organique divalent contenant de 2 à 12 atomes de carbone; et au moins un groupe $R^3$ ou $R^4$ est aromatique; ledit mélange-mère contenant 100 à 900 parties dudit agent de codurcissement pour 100 parties dudit caoutchouc.